# EUROPEAN PATENT APPLICATION

(11) **EP 4 184 985 A1**
(43) Date of publication of application: **24.05.2023**
(21) Application number: 20947651.4
(22) Date of filing: 30.07.2020
(51) Int. Cl.: H04W 24/00, H04L 41/00

(54) **COMMUNICATION METHOD AND COMMUNICATION APPARATUS**

(71) Applicant: Huawei Technologies Co., Ltd., Shenzhen, Guangdong 518129 (CN)
(72) Inventor: YIN, Jixiong, Shenzhen, Guangdong 518129 (CN); WU, Bin, Shenzhen, Guangdong 518129 (CN); TONG, Wei, Shenzhen, Guangdong 518129 (CN); LIU, Yun, Shenzhen, Guangdong 518129 (CN)
(74) Representative: Gill Jennings & Every LLP
(86) International application number: PCT/CN2020/106002
(87) International publication number: WO 2022/021253

(57) **Abstract**

This application discloses a communication method and a communication apparatus. The method includes: A first network device receives a first sub-service packet through a first service interface of a primary network element, and receives a second sub-service packet through a second service interface of a secondary network element, where the first primary network element and the first secondary network element are both included in the first network device; the first network device obtains a first group of service packets and a second group of service packets based on the first sub-service packet and the second sub-service packet; and the first network device sends the first group of service packets through a first air interface of the first primary network element and sends the second group of service packets through a second air interface of the first secondary network element. This method can improve air interface bandwidth utilization of a microwave device and enable a service packet to be successfully transmitted when a hardware fault occurs on the primary network element of the microwave device.

## Description

### TECHNICAL FIELD

This application relates to the communications field, and in particular, to a communication method and a communication apparatus.

### BACKGROUND

Nowadays, with the development of mobile wireless networks to the 5G era, traffic of a base station is increasing, and a microwave transmission rate of a base station for backhaul is higher than 10 Gbps (Gigabit/s). A high-bandwidth microwave (eBand) becomes the main solution for end access in 5G service backhaul.

In a current 5G high-bandwidth background, to meet a high-reliability transmission requirement of an air interface, in a scenario in which two microwave devices and two service ends are networked, the two microwave devices usually use a physical link aggregation (Physical Link Aggregation, PLA) technology to transmit service packets. PLA is a physical-layer link aggregation technology that enables the microwave device to evenly distribute the service packets to air interface links, maximizing air interface bandwidth efficiency and improving reliability. In the scenario in which two microwave devices and two service ends are networked, a microwave device receives a service packet from a service end (corresponding to a transmit end), the two microwave devices transmit the service packet by using the PLA technology, and the other microwave device sends the received service packet to another service end (corresponding to a receive end). The microwave devices include a primary network element and a secondary network element. Currently, a common service packet transmission solution between microwave devices is as follows: A microwave device transmits a service packet to another microwave device by using the PLA technology by using a primary network element and a secondary network element. In this solution, when a hardware fault occurs on the primary network element of the microwave device, the service may be switched to the secondary network element (to be specific, the service packet is transmitted by using the secondary network element), so that normal transmission of the service packet can be ensured. However, in this solution, only one of the primary network element and the secondary network element of the microwave device is in an active state, and the other is in an inactive state. This causes low air interface bandwidth utilization. Therefore, a solution for improving air interface bandwidth utilization needs to be researched.

### SUMMARY

Embodiments of this application provide a communication method and a communication apparatus, so that a service packet can still be successfully transmitted when a hardware fault occurs on a primary network element of a microwave device while air interface bandwidth utilization of the microwave device is improved.

According to a first aspect, an embodiment of this application provides a communication method. The method includes: A first network device receives a first sub-service packet through a first service interface of a primary network element, and receives a second sub-service packet through a second service interface of a secondary network element, where the first primary network element and the first secondary network element are both included in the first network device; the first network device obtains a first group of service packets and a second group of service packets based on the first sub-service packet and the second sub-service packet, where at least part of information in any service packet included in the first group of service packets and at least part of information in any service packet comprised in the second group of service packets are included in the first sub-service packet and/or the second sub-service packet; and the first network device sends the first group of service packets through a first air interface of the first primary network element, and sends the second group of service packets through a second air interface of the first secondary network element.

Because the air interfaces of the first primary network element and the first secondary network element of the first network device are simultaneously used, air interface bandwidth of the first network device may be used to a maximum extent. The first secondary network element may be switched to a primary network element of the first network device. Optionally, the first secondary network element has all functions of the first primary network element. It may be understood that the first secondary network element may be switched to the primary network element of the first network device. Because the first secondary network element may receive the service packet through the second service interface, when the first primary network element of the first network device is faulty, successful service transmission can be ensured.

In this embodiment of this application, the first network device receives the first sub-service packet through the first service interface of the primary network element, and receives the second sub-service packet through the second service interface of the secondary network element; and sends the first group of service packets through the first air interface of the primary network element and sends the second group of service packets through the second air interface of the secondary network element. This method can improve air interface bandwidth utilization of a microwave device and enable a service packet to be successfully transmitted when a hardware fault occurs on the primary network element of the microwave device.

In a possible implementation, the first group of service packets and the second group of service packets are obtained by dividing a plurality of service packets obtained based on the first sub-service packet and the second sub-service packet into two groups.

In a possible implementation, that the first network device obtains a first group of service packets and a second group of service packets based on the first sub-service packet and the second sub-service packet includes: The first network device combines the first sub-service packet and the second sub-service packet to obtain a target service packet; slices the target service packet to obtain a plurality of service packets; and divides the plurality of service packets into two parts to obtain the first group of service packets and the second group of service packets.

The first sub-service packet may be understood as a part of the target service packet sent by a service end to the first network device, and the second sub-service packet may be understood as the other part of the target service packet sent by the service end to the first network device. The first network device may combine the first sub-service packet and the second sub-service packet to obtain the complete target service packet. The first network device performs packet slicing on the target service packet, to obtain a plurality of service packets that carry less information, namely, a plurality of smaller service packets. A task for the first network device to send the target service packet is converted into a task of sending the plurality of smaller service packets. It should be understood that, when an error occurs in the target service packet, the first network device needs to retransmit the target service packet. The error in the target service packet is probably an error in a small part of the target service packet. Retransmitting the target service packet increases unnecessary resource overheads. The first network device performs packet slicing on the target service packet to obtain the plurality of smaller service packets. When an error occurs in a service packet in the plurality of smaller service packets, the first network device may send only the error service packet. In this way, resource overheads can be reduced.

In this implementation, the air interface bandwidth of the first network device can be fully used, and resource overheads can be reduced.

In a possible implementation, that the first network device obtains a first group of service packets and a second group of service packets based on the first sub-service packet and the second sub-service packet includes: When a first transmission path and a second transmission path are both connected, the first network device obtains the first group of service packets and the second group of service packets based on the first sub-service packet and the second sub-service packet, where the first transmission path includes a link between the first air interface and a second network device, and the second transmission path includes a link for the first primary network element to send data to the first secondary network element and a link between the second air interface and the second network device.

That the first transmission path and the second transmission path are both connected may be understood as a condition that needs to be met for the first network device to perform an operation of obtaining the first group of service packets and the second group of service packets based on the first sub-service packet and the second sub-service packet. Because the first transmission path is a path for the first network device to transmit the first group of service packets, and the second transmission path is a path for the first network device to transmit the second group of service packets, two groups of service packets need to be obtained only when the first transmission path and the second transmission path are both connected. It should be understood that if at least one of the first transmission path and the second transmission path is not connected, the first network device does not need to obtain two groups of service packets. In addition, if at least one of the first transmission path and the second transmission path is not connected, when the first network device sends a service packet through the first transmission path and the second transmission path, sending of a part of service packets inevitably fails.

In this implementation, when the first transmission path and the second transmission path are both connected, the first network device obtains the first group of service packets and the second group of service packets based on the first sub-service packet and the second sub-service packet, so that the first group of service packets and the second group of service packets can be both successfully sent.

In a possible implementation, the method further includes: The first network device obtains a to-be-sent first service packet; when the second transmission path is not connected, the first network device slices the first service packet to obtain a third group of service packets; and the network device sends the third group of service packets through the first air interface of the first primary network element; and when the first transmission path is not connected, the first network device slices the first service packet to obtain a fourth group of service packets; and the first network device sends the fourth group of service packets through the second air interface of the first secondary network element.

In this implementation, all service packets obtained by performing packet slicing on the first service packet are sent through the connected transmission path, to ensure that all service packets obtained by performing packet slicing on the first service packet are successfully sent.

In a possible implementation, that the first network device obtains a to-be-sent first service packet includes: The first network device receives a third sub-service packet through the first service interface and receives a fourth sub-service packet through the second service interface; and the first network device obtains the first service packet based on the third sub-service packet and the fourth sub-service packet; or the first network device receives the first service packet through the second service interface.

In this implementation, the first network device simultaneously receives service packets through the first service interface of the first primary network element and the second service interface of the first secondary network element, or receives the service packet only through the second service interface of the first secondary network element, instead of receiving the service packet only through the first service interface of the first primary network element, so that the service packet can still be received when the first primary network element is faulty.

In a possible implementation, the method further includes: The first secondary network element is switched to the first primary network element of the first network device when a first link is disconnected and alarm information is received, where the first link is a link for the first secondary network element to send data to the first primary network element and/or a link for the first primary network element to send data to the first secondary network element, and the alarm information indicates that the second network device does not receive a service packet sent by the first primary network element through the first air interface.

That the first link is disconnected and the alarm information is received may be understood as a condition that the first primary network element cannot be used as the primary network element of the first network device, in other words, a condition that the first secondary network element is switched to the primary network element of the first network device. The alarm information may indicate that an air interface link between the first primary network element and the second network device is faulty. The alarm information may indicate that the first primary network element fails to send the service packet through the first air interface, or the service packet sent through the first air interface fails to be received by the second network device. In other words, the air interface link used by the first network device to send the service packet to the second network device through the first air interface of the first primary network element is disconnected. The first link disconnection indicates that a link used by the first secondary network element to send data to the first primary network element is disconnected and/or a link used by the first primary network element to send data to the first secondary network element is disconnected. It should be understood that, when an air interface link used by the first primary network element to send the service packet to the second network device through the first air interface is disconnected, and a link used by the first primary network element to send data to the first secondary network element is disconnected, the first primary network element cannot successfully send the service packet, and the first primary network element naturally cannot continue to serve as the primary network element of the first network device. It should be understood that when the first primary network element cannot receive the service packet from the first secondary network element, the first primary network element can receive the service packet only through the first service interface of the first primary network element, and the first primary network element cannot continue to serve as the primary network element of the first network device.

In this implementation, when the first link is disconnected and the alarm information is received, the first secondary network element is switched to the first primary network element of the first network device, to ensure successful transmission of the service packet.

In a possible implementation, a case in which the second transmission path is not connected includes at least one of a fault on a second link, a fault on the first secondary network element, and a fault on a first air interface link, where the second link is a link used by the first primary network element to send data to the first secondary network element, and the first air interface link is a link between the second air interface and the second network device.

In this implementation, the first network device may accurately determine the case in which the second transmission path is not connected.

According to a second aspect, an embodiment of this application provides another communication method. The method includes: A second network device receives a first group of service packets through a third air interface of a second primary network element, and receiving a second group of service packets through a fourth air interface of a second secondary network element, where the second primary network element and the second secondary network element are both comprised in the second network device; the second network device obtains a first sub-service packet and a second sub-service packet based on the first group of service packets and the second group of service packets, where at least part of information in any service packet included in the first group of service packets and at least part of information in any service packet included in the second group of service packets are included in the first sub-service packet and/or the second sub-service packet; and the second network device sends the first sub-service packet through a third service interface of the second primary network element, and sends the second sub-service packet through a fourth service interface of the second secondary network element.

The second network device is a microwave device. Optionally, the second secondary network element has all functions of the second primary network element. In other words, the second secondary network element may be switched to a primary network element of the second network device. The second network device receives the service packets through the third air interface of the second primary network element and the fourth air interface of the second secondary network element simultaneously (which may also be understood as in parallel), and sends the service packets to a service end through the service interface of the second primary network element and the service interface of the second secondary network element simultaneously. It should be understood that, when the second primary network element of the second network device is faulty, the second secondary network element of the second network device may be switched to the primary network element; and when all service interfaces of the second primary network element of the second network device are faulty, the second network device may send data only through the service interface of the second secondary network element.

In this embodiment of this application, the second network device receives the service packets through the third air interface of the second primary network element and the fourth air interface of the second secondary network element simultaneously, and sends the service packets to a service end through the service interface of the second primary network element and the service interface of the second secondary network element simultaneously. This method can improve air interface bandwidth utilization of a microwave device and enable a service packet to be successfully transmitted when a hardware fault occurs on the primary network element of the microwave device.

In a possible implementation, that the second network device obtains a first sub-service packet and a second sub-service packet based on the first group of service packets and the second group of service packets includes: When the first group of service packets and/or the second group of service packets include two labels, the second network device obtains the first sub-service packet and the second sub-service packet based on the first group of service packets and the second group of service packets, where a label of the first sub-service packet is a first label, and a label of the second sub-service packet is a second label.

The first sub-service packet and the second sub-service packet may be service packets to be sent by the second network device through different service interfaces. The first sub-service packet may be a service packet to be sent through a service interface corresponding to the first label, and the second sub-service packet may be a service packet to be sent through a service interface corresponding to the second label. In this implementation, the second network device obtains the first sub-service packet and the second sub-service packet with different labels based on the first group of service packets and the second group of service packets, to send the first sub-service packet and the second sub-service packet through different service interfaces based on the two labels included in the first group of service packets and/or the second group of service packets.

In a possible implementation, that the second network device obtains a first sub-service packet and a second sub-service packet based on the first group of service packets and the second group of service packets includes: performing, based on slice labels of service packets included in the first group of service packets and slice labels of service packets included in the second group of service packets, packet slicing on the service packets included in the first group of service packets and the service packets included in the second group of service packets, to obtain a target service packet; and dividing the target service packet into two parts to obtain the first sub-service packet and the second sub-service packet.

Optionally, the second network device divides the target service packet into the first sub-service packet and the second sub-service packet based on a label included in the target service packet, where in the target service packet, a label of the first sub-service packet is a first label, and a label of the second sub-service packet is a second label. The target service packet does not include a slice label.

In this implementation, the second network device may accurately and quickly obtain, based on the first group of service packets and the second group of service packets, the first sub-service packet and the second sub-service packet that include different labels.

In a possible implementation, the method further includes: The second network device obtains a first service packet; and the second network device sends the first service packet through the third service interface or the fourth service interface when the first service packet includes one label.

In a possible implementation, that the second network device sends the first service packet through a first service interface of the second primary network element or a second service interface of the second secondary network element when the first service packet includes one label includes: The second network device send the first service packet through the third service interface of the second primary network element when the first service packet includes the first label, where the first service packet is a service packet received by the second network device from a first network device, and the first label is a label added by a first primary network element of the first network device to the first service packet; and the second network device sends the first service packet through the fourth service interface of the second secondary network element when the first service packet includes the second label, where the second label is a label added by a first secondary network element of the first network device to the first service packet.

The first label corresponds to the third service interface, and the second label corresponds to the fourth service interface.

In this implementation, the second network device sends the first service packet through a service interface corresponding to the label included in the first service packet, so that the service end (corresponding to a receive end) receives the service packet from the second network device is equivalent to directly receiving the service packet from the service end serving as a transmit end.

According to a third aspect, an embodiment of this application provides a communication apparatus. The communication apparatus includes: a first primary network element, configured to receive a first sub-service packet through a first service interface; and a first secondary network element, configured to receive a second sub-service packet through a second service interface. The first primary network element is further configured to obtain a first group of service packets and a second group of service packets based on the first sub-service packet and the second sub-service packet, where at least part of information in any service packet included in the first group of service packets and at least part of information in any service packet included in the second group of service packets are included in the first sub-service packet and/or the second sub-service packet. The first primary network element is further configured to send the first group of service packets through a first air interface. The first secondary network element is further configured to send the second group of service packets through a second air interface.

In a possible implementation, the first group of service packets and the second group of service packets are obtained by dividing a plurality of service packets obtained based on the first sub-service packet and the second sub-service packet into two groups.

In a possible implementation, the first primary network element is specifically configured to: combine the first sub-service packet and the second sub-service packet to obtain a target service packet; slice the target service packet to obtain a plurality of service packets; and divide the plurality of service packets into two parts to obtain the first group of service packets and the second group of service packets.

In a possible implementation, the first primary network element is specifically configured to: when a first transmission path and a second transmission path are both connected, obtain the first group of service packets and the second group of service packets based on the first sub-service packet and the second sub-service packet, where the first transmission path includes a link between the first air interface and a second network device, and the second transmission path includes a link for the first primary network element to send data to the first secondary network element and a link between the second air interface and the second network device.

In a possible implementation, the first primary network element is further configured to: obtain a to-be-sent first service packet; when the second transmission path is not connected, slice the first service packet to obtain a third group of service packets, and send the third group of service packets through the first air interface of the first primary network element; and when the first transmission path is not connected, slice the first service packet to obtain a fourth group of service packets, and send the fourth group of service packets through the second air interface of the first secondary network element.

In a possible implementation, the first primary network element is specifically configured to: receive a third sub-service packet through the first service interface and receive a fourth sub-service packet through the second service interface; and obtain the first service packet based on the third sub-service packet and the fourth sub-service packet; or the first primary network element is specifically configured to receive the first service packet through the second service interface.

In a possible implementation, the first secondary network element is further configured to be switched to the first primary network element of the first network device when a first link is disconnected and alarm information is received, where the first link is a link for the first secondary network element to send data to the first primary network element and/or a link for the first primary network element to send data to the first secondary network element, and the alarm information indicates that the second network device does not receive a service packet sent by the first primary network element through the first air interface.

In a possible implementation, a case in which the second transmission path is not connected includes at least one of a fault on a second link, a fault on the first secondary network element, and a fault on a first air interface link, where the second link is a link used by the first primary network element to send data to the first secondary network element, and the first air interface link is a link between the second air interface and the second network device.

For technical effects brought by the third aspect or the possible implementations, refer to the descriptions of the technical effects brought by the first aspect or the corresponding implementations.

According to a fourth aspect, an embodiment of this application provides another communication apparatus. The communication apparatus includes: a second primary network element, configured to receive a first group of service packets through a third air interface; and a second secondary network element, configured to receive a second group of service packets through a fourth air interface. The second primary network element is further configured to obtain a first sub-service packet and a second sub-service packet based on the first group of service packets and the second group of service packets, where at least part of information in any service packet included in the first group of service packets and at least part of information in any service packet included in the second group of service packets are included in the first sub-service packet and/or the second sub-service packet. The second primary network element is further configured to send the first sub-service packet through a third service interface. The second secondary network element is further configured to send the second sub-service packet through a fourth service interface of the second secondary network element.

In a possible implementation, the second primary network element is specifically configured to: when the first group of service packets and/or the second group of service packets include two labels, obtain the first sub-service packet and the second sub-service packet based on the first group of service packets and the second group of service packets, where a label of the first sub-service packet is a first label, and a label of the second sub-service packet is a second label.

In a possible implementation, the second primary network element is specifically configured to: perform, based on slice labels of service packets included in the first group of service packets and slice labels of service packets included in the second group of service packets, packet slicing on the service packets included in the first group of service packets and the service packets included in the second group of service packets, to obtain a target service packet; and divide the target service packet into two parts to obtain the first sub-service packet and the second sub-service packet.

In a possible implementation, the second primary network element is further configured to send the first service packet through the third service interface or the fourth service interface when the first service packet comprises one label.

In a possible implementation, the second primary network element is further configured to: send the first service packet through the third service interface when the first service packet includes the first label, where the first service packet is a service packet received by the second network device from a first network device, and the first label is a label added by a first primary network element of the first network device to the first service packet; and send the first service packet through the fourth service interface of the second secondary network element when the first service packet includes the second label, where the second label is a label added by a first secondary network element of the first network device to the first service packet.

For technical effects brought by the fourth aspect or the possible implementations, refer to the descriptions of the technical effects brought by the second aspect or the corresponding implementations.

According to a fifth aspect, this application provides a communication apparatus. The communication apparatus includes a processor. When the processor executes a computer program or instructions in a memory, the method according to the first aspect is performed.

According to a sixth aspect, this application provides a communication apparatus. The communication apparatus includes a processor. When the processor invokes a computer program or instructions in a memory, the method according to the second aspect is performed.

According to a seventh aspect, an embodiment of this application provides a communication apparatus. The communication apparatus includes a processor and a memory. The memory is configured to store computer-executable instructions. The processor is configured to execute the computer-executable instructions stored in the memory, so that the communication apparatus performs the method according to the first aspect or any one of the possible implementations. The communication apparatus provided in the fifth aspect may be the first network device in the first aspect.

According to an eighth aspect, an embodiment of this application provides a communication apparatus. The communication apparatus includes a processor and a memory. The memory is configured to store computer-executable instructions. The processor is configured to execute the computer-executable instructions stored in the memory, so that the communication apparatus performs the method according to the second aspect or any one of the possible implementations. The communication apparatus provided in the sixth aspect may be the second network device in the second aspect.

According to a ninth aspect, this application provides a communication apparatus. The communication apparatus includes a processor, a memory, and a transceiver. The transceiver is configured to receive a signal or send a signal, the memory is configured to store program code, and the processor is configured to execute the program code, to enable the communication apparatus to perform the method according to the first aspect.

According to a tenth aspect, this application provides a communication apparatus. The communication apparatus includes a processor, a memory, and a transceiver. The transceiver is configured to receive a signal or send a signal, the memory is configured to store program code, and the processor is configured to execute the program code, to enable the communication apparatus to perform the method according to the second aspect.

According to an eleventh aspect, this application provides a computer-readable storage medium. The computer-readable storage medium is configured to store instructions or a computer program; and when the instructions or the computer program is executed, the method according to the first aspect is implemented.

According to a twelfth aspect, this application provides a computer-readable storage medium. The computer-readable storage medium is configured to store instructions or a computer program; and when the instructions or the computer program is executed, the method according to the second aspect is implemented.

According to a thirteenth aspect, this application provides a computer program product. The computer program product includes instructions or a computer program; and when the instructions or the computer program is executed, the method according to the first aspect is implemented.

According to a fourteenth aspect, this application provides a computer program product. The computer program product includes instructions or a computer program; and when the instructions or the computer program is executed, the method according to the second aspect is implemented.

According to a fifteenth aspect, this application provides a microwave communication system, including a first network device and a second network device. The first network device is configured to perform the method according to the first aspect, and the second network device is configured to perform the method according to the second aspect.

### BRIEF DESCRIPTION OF DRAWINGS

FIG. 1 is a schematic diagram of a partial architecture of a microwave communication system according to an embodiment of this application;
FIG. 2 is a schematic diagram of a network architecture of another microwave communication system according to an embodiment of this application;
FIG. 3 is a schematic diagram of a partial architecture of another microwave communication system according to an embodiment of this application;
FIG. 4A is a schematic diagram of a partial architecture of still another microwave communication system according to an embodiment of this application;
FIG. 4B is a schematic diagram of a service packet flow direction according to an embodiment of this application;
FIG. 5 is a flowchart of a communication method according to an embodiment of this application;
FIG. 6A to FIG. 6C are schematic diagrams of service packet flow directions according to an embodiment of this application;
FIG. 7 is a flowchart of another communication method according to an embodiment of this application;
FIG. 8A to FIG. 8C are schematic diagrams of service packet flow directions according to an embodiment of this application;
FIG. 9A to FIG. 9C are schematic diagrams of service packet flow directions according to an embodiment of this application;
FIG. 10A to FIG. 10C are schematic diagrams of service packet flow directions according to an embodiment of this application;
FIG. 11 is a schematic flowchart of a method in which a first network device implements primary/secondary switching according to an embodiment of this application;
FIG. 12 is a flowchart of another communication method according to an embodiment of this application;
FIG. 13 is a flowchart of another communication method according to an embodiment of this application;
FIG. 14 is a schematic diagram of a private line service of a microwave device according to an embodiment of this application;
FIG. 15 is a schematic diagram of a structure of a communication apparatus according to an embodiment of this application;
FIG. 16 is a schematic diagram of a structure of another communication apparatus according to an embodiment of this application; and
FIG. 17 is a schematic diagram of a structure of another communication apparatus according to an embodiment of this application.

### DESCRIPTION OF EMBODIMENTS

The following describes embodiments of this application with reference to the accompanying drawings in embodiments of this application.

In the specification, the claims, and the accompanying drawings of this application, the terms "first", "second", and the like are intended to distinguish between different objects but do not indicate a particular order. In addition, the terms "including" and "having" and any other variants thereof are intended to cover a non-exclusive inclusion. For example, a process, method, system, product, or device that includes a series of steps or units is not limited to the listed steps or units, but optionally further includes an unlisted step or unit, or optionally further includes another inherent step or unit of the process, method, product, or device.

It should be understood that, in this application, "at least one (item)" means one or more, "a plurality of means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" usually indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

The following describes a scenario in embodiments of this application.

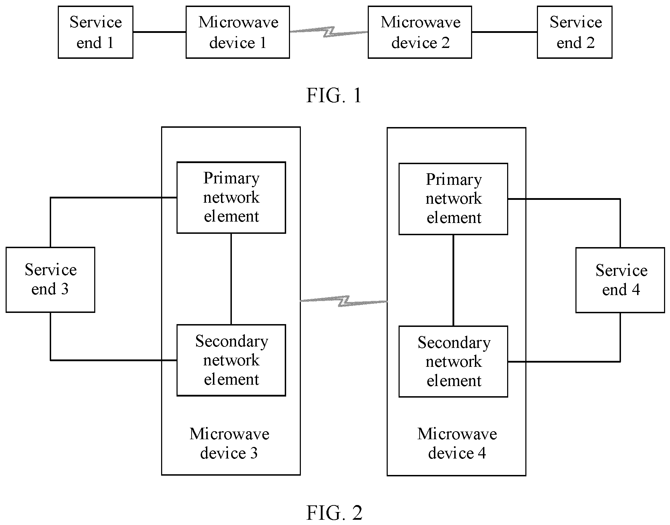

Technical solutions provided in this application may be applied to various microwave communication systems, for example, a microwave communication system including two microwave devices and two service ends (a router, an indoor unit, or the like). FIG. 1 is a schematic diagram of a partial architecture of a microwave communication system according to this application. As shown in FIG. 1, the microwave communication system includes one or more service ends. In FIG. 1, that only two service ends (to be specific, a service end 1 and a service end 2) and two microwave devices (to be specific, microwave device 1 and microwave device 2) are included is used as an example. The service end 1 communicates with the microwave device 1, the service end 2 communicates with the microwave device 2, and the two microwave devices communicate with each other through microwave.

The service end is a device, for example, a router or an indoor unit (Indoor unit, IDU), that can communicate with a microwave device. The microwave device may be a device that communicates with another device through an electromagnetic wave (namely, microwave) with a wavelength between 0.1 millimeter and 1 meter. The microwave device in this application may be a full-outdoor E-band microwave device (for example, an RTN 380), or may be another device that uses microwave for communication. In the scenario of this embodiment of this application, two microwave devices are configured to implement data transmission between two service ends, and each service end is both a transmit end and a receive end. Data exchange between two service ends may be implemented by using two microwave devices. It should be understood that a service end serves as a transmit end when sending data, and serves as a receive end when receiving data. In other words, the service end 1 may serve as a transmit end to send data to the service end 2, and the service end 2 may serve as a transmit end to send data to the service end 1.

In the microwave communication system shown in FIG. 1, the microwave device 1 and the microwave device 2 may be configured to perform the communication method provided in this embodiment of this application.

The following describes in detail related terms and technical backgrounds of this application.

Link aggregation (link aggregation) means a plurality of physical ports are bound together to form a logical port, to implement load sharing among member ports for inbound/outbound traffic. A service end (such as a switch) determines, based on a port load sharing policy configured by a user, a member port from which packets are sent to a peer service end. When the service end detects that a link of a member port is faulty, the service end stops sending packets on this port, and recalculates a port for sending packets in the remaining links based on the load sharing policy. After the faulty port recovers, the service end recalculates a port for sending packets again. Link aggregation is an important technology for increasing link bandwidth and realizing link transmission flexibility and redundancy.

PLA is a physical-layer link aggregation technology that can evenly distribute service traffic to air interface links, maximizing air interface bandwidth efficiency and improving reliability. Main advantages of the PLA are as follows:
(1) Bandwidth utilization improvement: A plurality of air interface links are used as communication channels and bound as one physical link.
(2) Load balancing: Service traffic is sliced and evenly distributed to the plurality of air interface links.
(3) Improved reliability: Members in a same group back up each other in protection.

A link aggregation group (link aggregation group, LAG) binds a plurality of links that are connected to a same device, to increase bandwidth and improve link reliability. An aggregated link may be regarded as a logical link. The LAG aggregates a plurality of physical links to form a logical link with a higher rate to transmit data. A scope of link aggregation is between adjacent devices and is irrelevant to a structure of the entire network. Link aggregation is also referred to as port aggregation because each link corresponds to a port in an Ethernet network. The LAG may implement the following functions:
(1) Increasing bandwidth: The LAG can provide users with an economical method for increasing link bandwidth. Users can obtain a data link with higher bandwidth by binding a plurality of physical links without upgrading existing devices. Bandwidth of the data link is equal to total bandwidth of all the physical links. An aggregation module distributes service traffic to different members according to a load sharing algorithm, implementing a function of link-level load sharing. When members in an aggregation group change or a part of links fail, the traffic is re-allocated automatically.
(2) Increasing link availability: Members in the LAG dynamically back up each other. When a link fails, another member can take over immediately. A process of starting the backup in link aggregation is only related to links in the aggregation group, and is not related to links outside the aggregation group.

A link aggregation control protocol (link aggregation control protocol, LACP) is a protocol used to implement dynamic link aggregation. In the LACP protocol, information is exchanged with a peer end through a link aggregation control protocol data unit (link aggregation control protocol data unit, LACPDU).

The following describes a solution for applying link aggregation to a microwave communication system.

FIG. 2 is a schematic diagram of a network architecture of another microwave communication system according to an embodiment of this application. As shown in FIG. 2, a microwave device 3 and a microwave device 4 each include a primary network element and a secondary network element, a LAG is configured between a service end 3 and a primary network element of the microwave device 3, a LAG is configured between the service end 3 and a secondary network element of the microwave device 3, a LAG is configured between a service end 4 and a primary network element of the microwave device 4, a LAG is configured between the service end 4 and a secondary network element of the microwave device 4, and PLA is configured between the microwave device 3 and the microwave device 4. As shown in FIG. 2, in this solution, a service end may transmit a maximum of 10 G services, and the microwave device 3 and the microwave device 4 perform even load sharing by using PLA. A primary network element and a secondary network element of the microwave device may perform device-level protection. To be specific, when a hardware fault occurs on the primary network element of the microwave device, the secondary network element is switched to the primary network element, to ensure normal services. In this solution, because only one of the primary network element and the secondary network element of the microwave device is in an active state, only a maximum of 10 G services can be transmitted, and air interface bandwidth utilization cannot be maximized. It can be learned that this solution has a problem of low air interface bandwidth utilization. To improve the air interface bandwidth utilization of the microwave device, and ensure that a service packet can still be successfully transmitted when a hardware fault occurs on the primary network element of the microwave device, this application provides a communication method. With reference to the accompanying drawings, the following describes a main principle of the communication method provided in this embodiment of this application.

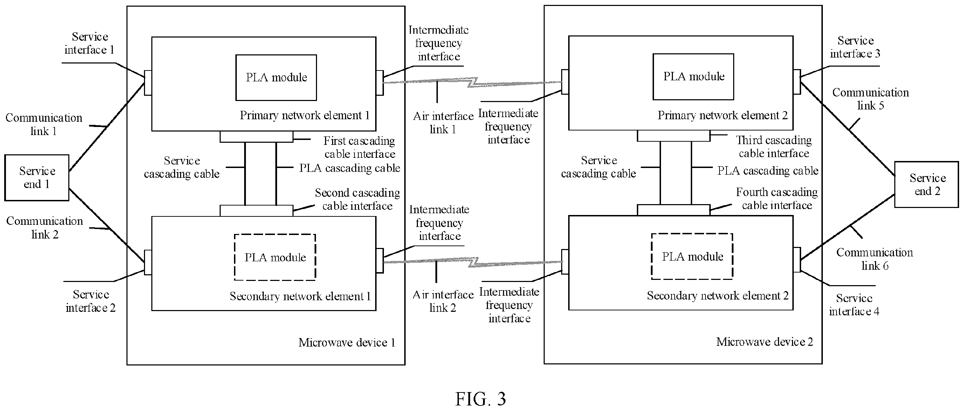

FIG. 3 is a schematic diagram of a partial architecture of another microwave communication system according to an embodiment of this application. As shown in FIG. 3, the microwave communication system includes a service end 1, a service end 2, a microwave device 1 (corresponding to a first network device), and a microwave device 2 (corresponding to a second network device). The microwave device 1 includes a primary network element 1 (corresponding to a first primary network element) and a secondary network element 1 (corresponding to a first secondary network element), and the microwave device 2 (corresponding to the second network device) includes a primary network element 2 (corresponding to a second primary network element) and a secondary network element 2 (corresponding to a second secondary network element). A communication link 1 exists between a service interface 1 (corresponding to a first service interface) of the primary network element 1 and the service end 1, a communication link 2 exists between a service interface 2 (corresponding to a second service interface) of the secondary network element 1 and the service end 1, and two communication links exist between the primary network element 1 and the secondary network element 1. A communication link 3 is a link (namely, a service cascading line on the left in FIG. 3) for the secondary network element 1 to send data to the primary network element 1, and a communication link 4 is a link (namely, a PLA cascading line on the left in FIG. 3) for the primary network element 1 to send data to the secondary network element 1. A communication link 5 exists between a service interface 3 (corresponding to a third service interface) of the primary network element 2 and the service end 2, and a communication link 6 exists between a service interface 4 (corresponding to a fourth service interface) of the secondary network element 2 and the service end 2. There are two communication links between the primary network element 2 and the secondary network element 2. A communication link 7 is a link (namely, a PLA cascading line on the right in FIG. 3) for the secondary network element 2 to send data to the primary network element 2, and a communication link 8 is a link (namely, a service cascading line on the right in FIG. 3) for the primary network element 2 to send data to the secondary network element 2. An air interface link 1 exists between an intermediate frequency interface (corresponding to a first air interface) of the primary network element 1 and an intermediate frequency interface (corresponding to a third air interface) of the primary network element 2, and an air interface link 2 exists between an intermediate frequency interface (corresponding to a second air interface) of the secondary network element 1 and an intermediate frequency interface (corresponding to a fourth air interface) of the secondary network element 2. The primary network element 1, the secondary network element 1, the primary network element 2, and the secondary network element 2 each have a PLA module. Optionally, a first cascading interface includes a PLA cascading interface and a service cascading interface, and a second cascading interface includes a PLA cascading interface and a service cascade port. The primary network element sends service packets to a PLA cascading interface of the secondary network element through a PLA cascading interface of the primary network element, and the secondary network element sends service packets to a service cascading interface of the primary network element through a service cascading interface of the secondary network element. A connection between the PLA cascading interface of the primary network element and the PLA cascading interface of the secondary network element may be a PLA cascading line (for example, an optical fiber), and a connection between the service cascading interface of the primary network element and the service cascading interface of the secondary network element may be a service cascading line (for example, an optical fiber). The service interface 1 of the primary network element 1 and the service interface 2 of the secondary network element 1 receive service packets at same or different rates. For example, the service interface 1 of the primary network element 1 and the service interface 2 of the secondary network element 1 both receive service packets at a rate of 10 G. For another example, the service interface 1 of the primary network element 1 receives service packets at a rate of 12 G, and the service interface 2 receives service packets at a rate of 8 G. In some embodiments, the service end 1 may send service packets through the communication link 1 and the communication link 2 at different rates based on quality of the communication link 1 and quality of the communication link 2.

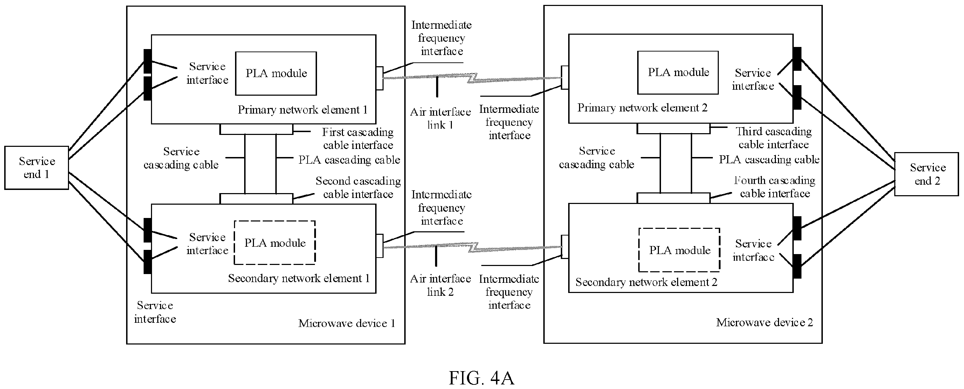

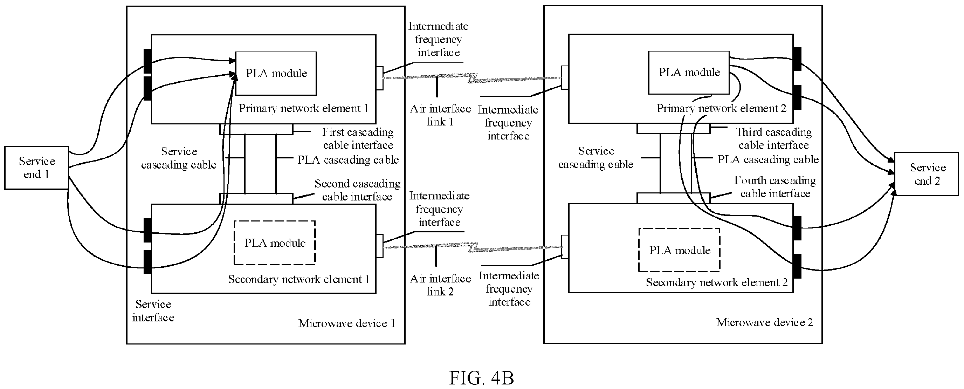

FIG. 4A is a schematic diagram of a partial architecture of still another microwave communication system according to an embodiment of this application. In FIG. 4A, each black rectangular area represents one service interface. The difference between the architecture in FIG. 4A and the architecture in FIG. 3 lies in that, both a primary network element 1 and a secondary network element 1 of a microwave device 1 in FIG. 4A have two or more service interfaces, and both a primary network element 2 and a secondary network element 2 of a microwave device 2 have two or more service interfaces. In FIG. 4A, the primary network element 1, the secondary network element 1, the primary network element 2, and the secondary network element 2 may all perform service packet transmission with the service end through two or more service interfaces. In some embodiments, a first cascading interface includes a PLA cascading interface and a service cascading interface, and a second cascading interface includes a PLA cascading interface and a service cascading interface. Service packets received by the secondary network element 1 from two or more service interfaces are all sent to a service cascading interface of the primary network element 1 through a same service cascading interface, and the secondary network element 2 receives service packets from the primary network element 2 through a same service cascading interface. FIG. 4B is a schematic diagram of a service packet flow direction according to an embodiment of this application. FIG. 4B shows a possible service packet flow direction of service packet transmission performed by the microwave communication system in FIG. 4A. In FIG. 4B, each solid line with an arrow represents a flow direction of a service packet, both a primary network element 1 and a secondary network element 1 receive, through two or more service interfaces, service packets sent by a service end 1, and both a primary network element 2 and a secondary network element 2 send the service packets to a service end 2 through two or more service interfaces. In some embodiments, a first cascading interface includes one PLA cascading interface and a plurality of service cascading interfaces, and a second cascading interface includes one PLA cascading interface and a plurality of service cascading interfaces. Service packets received by the secondary network element 1 from two or more service interfaces are sent to a service cascading interface of the primary network element 1 through different service cascading interfaces, and the secondary network element 2 receives, through different service cascading interfaces, service packets sent by the primary network element 2.

A possible procedure of the communication method provided in this embodiment of this application is as follows: The service end 1 accesses the service interface 1 of the primary network element 1 and the service interface 2 of the secondary network element 1 through two (or more) communication links (for example, the communication link 1 and the communication link 2). The secondary network element 1 sends received service packets to a PLA module of the primary network element 1 through a service cascading line (namely, the communication link 3). The PLA module of the primary network element 1 combines a first sub-service packet received by the primary network element 1 through the service interface 1 and a second sub-service packet from the secondary network element 1, to obtain a target service packet, and performs packet slicing on the target service packet to obtain two groups of service packets. A first group of service packets are sent to the primary network element 2 through an air interface (namely, the intermediate frequency interface) and an antenna of the primary network element 1, and a second group of service packets are sent to the secondary network element 1 through a PLA cascading line (namely, the communication link 4), and then sent to the secondary network element 2 through an air interface and an antenna of the secondary network element 1. After receiving the second group of service packets, an antenna of the secondary network element 2 sends the second group of service packets to a PLA module of the primary network element 2 through a PLA cascading line (namely, the communication link 7). The primary network element 2 slices and reassembles the first group of service packets received through the air interface of the network element and the second group of service packets sent by the secondary network element 2, to restore an Ethernet service signal (namely, the target service packet). A part of service packets (corresponding to the first sub-service packet) are sent to the service end 2 through the service interface of the primary network element 2, and the other part of service packets (corresponding to the second sub-service packet) are sent to the service interface of the secondary network element 2 through a service cascading line (namely, the communication link 8), and are finally sent to the service end 2.

Because the path for the service end 1 to send the service packets to the service end 2 and the path for the service end 2 to send the service packets to the service end 1 are symmetric, the following describes a main principle of the communication method provided in this embodiment of this application by using an example in which the service end 1 is used as the transmit end and the service end 2 is used as the receive end.

The main principle of the communication method provided in this embodiment of this application is as follows: When no microwave device or communication link in a microwave communication system is faulty, a primary network element and a secondary network element of a microwave device simultaneously receive service packets from a service end, and two microwave devices perform service packet transmission through two air interface links. One air interface link is an air interface link (for example, the air interface link 1 in FIG. 3) between primary network elements of two microwave devices, the other air interface link is an air interface link (for example, the air interface link 2 in FIG. 3) between secondary network elements of the two microwave devices. When a primary network element of a microwave device in the microwave communication system is faulty (for example, the primary network element 1 is faulty), the secondary network element of the microwave device is switched to the primary network element, to ensure transmission of the service packets. It may be understood that, when no microwave device or communication link in the microwave communication system is faulty, data transmission is performed between two microwave devices through two air interface links, and air interface bandwidth of the microwave devices can be used to the maximum extent; and when a primary network element of the microwave device in the microwave communication system is faulty, the microwave device performs device-level switching, to ensure normal service. In other words, according to the communication method provided in this embodiment of this application, both the primary network element and the secondary network element of the microwave device can perform service access, and device-level protection (to be specific, device-level switching, to ensure normal service) can be performed. It can be learned that, according to the communication method provided in this embodiment of this application, a service packet can still be successfully transmitted when a hardware fault occurs on the primary network element of the microwave device while air interface bandwidth utilization of the microwave device is improved.

The following describes the communication method provided in this embodiment of this application with reference to the accompanying drawings.

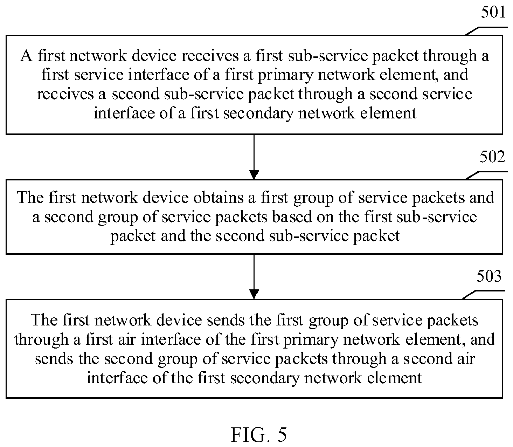

FIG. 5 is a flowchart of a communication method according to an embodiment of this application. As shown in FIG. 5, the method includes the following steps.

501: A first network device receives a first sub-service packet through a first service interface of a first primary network element, and receives a second sub-service packet through a second service interface of a first secondary network element.

The first primary network element and the first secondary network element are both included in the first network device. The first network device may be a microwave device. Refer to FIG. 3. In this application, the microwave device 1 represents the first network device, the primary network element 1 represents the first primary network element of the first network device, the secondary network element 1 represents the first secondary network element of the second network device, the intermediate frequency interface of the primary network element 1 represents the first air interface, the intermediate frequency interface of the secondary network element 2 represents the second air interface, the service interface 1 represents the first service interface, and the service interface 2 represents the second service port.

In some embodiments, the first sub-service packet and the second sub-service packet belong to different parts of a same group of service packets. For example, a first service end (for example, a router or an IDU) divides service packets to be sent to the first network device into two parts. One part (corresponding to the first sub-service packet) is sent to the first primary network element of the first network device, and the other part (corresponding to the second sub-service packet) is sent to the first secondary network element of the first network device. In other words, the first network device may simultaneously receive different parts of a same group of service packets through the first service interface of the first primary network element and the second service interface of the first secondary network element.

502: The first network device obtains a first group of service packets and a second group of service packets based on the first sub-service packet and the second sub-service packet.

The first group of service packets includes at least one service packet, and the second group of service packets includes at least one service packet. At least part of information in any service packet included in the first group of service packets and at least part of information in any service packet included in the second group of service packets are included in the first sub-service packet and/or the second sub-service packet. In other words, data carried in the first group of service packets and the second group of service packets are all included in the first sub-service packet and/or the second sub-service packet.

Optionally, the first group of service packets and the second group of service packets are obtained by dividing a plurality of service packets obtained based on the first sub-service packet and the second sub-service packet into two groups. A possible implementation of step 502 is as follows: The first network device combines the first sub-service packet and the second sub-service packet to obtain a target service packet; slices the target service packet to obtain a plurality of service packets; and divides the plurality of service packets into two parts to obtain the first group of service packets and the second group of service packets. The first sub-service packet and the second sub-service packet may be obtained by the first service end by dividing the target service packet into two parts. Therefore, the first network device may obtain the target service packet by combining the first sub-service packet and the second sub-service packet. That the first network device slices the target service packet to obtain a plurality of service packets may be: dividing data carried in the target service packet into a plurality of pieces; and obtaining one service packet based on each piece of data, where each service packet includes one slice label. Different service packets include different slice labels. For example, the first network device performs packet slicing on a larger service packet (for example, an Ethernet packet) to obtain 10 service packets with a same packet format, where the 10 service packets with the same packet format carry different information, and all information carried in the 10 service packets with the same packet format comes from the larger service packet. It should be understood that, the first network device may perform packet slicing on one larger service packet to obtain a plurality of smaller service packets, and another network device performs packet slicing on the smaller service packets based on slice labels of the smaller service packets, to obtain the larger service packet. Optionally, the first primary network element in the first network device uses a PLA module to combine the first sub-service packet and the second sub-service packet to obtain a target service packet, slices the target service packet to obtain a plurality of smaller service packets, and divides the plurality of smaller service packets into two parts to obtain the first group of service packets and the second group of service packets. The PLA module is a module that has a PLA function. The PLA function is a function of slicing a service packet pair, and evenly distributing obtained service packets to at least two air interface links. In other words, the PLA module can slice the service packet pair, and evenly distribute the obtained service packets to all air interface links.

503: The first network device sends the first group of service packets through a first air interface of the first primary network element, and sends the second group of service packets through a second air interface of the first secondary network element.

A possible implementation in which the first network device sends the second group of service packets through the second air interface of the first secondary network element is as follows: The first primary network element sends the second group of service packets to the first secondary network element; and the first secondary network element sends the second group of service packets through the second air interface. In an example, the first network device is the microwave device 1 in FIG. 3, the first primary network element of the first network device is the primary network element 1 in FIG. 3, and the first secondary network element of the first network device is the secondary network element 1 in FIG. 3. That the first primary network element sends the second group of service packets to the first secondary network element may be that the primary network element 1 sends the second group of service packets to the secondary network element 1 through the PLA cascading line.

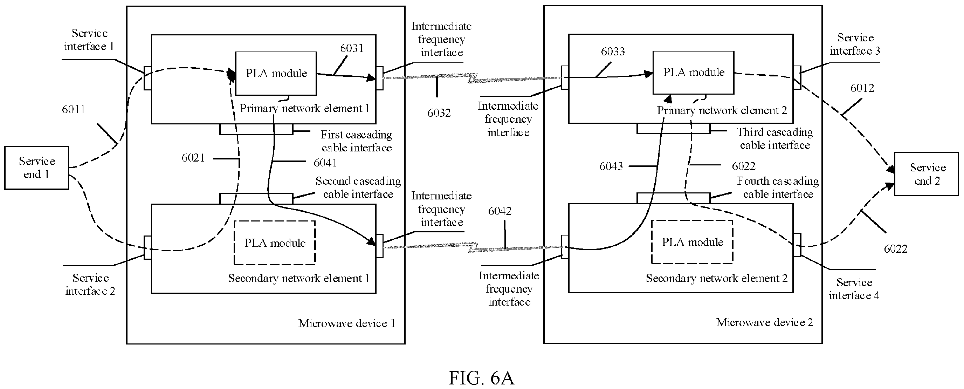

FIG. 6A is a schematic diagram of a service packet flow direction according to an embodiment of this application. A microwave device 1 in FIG. 6A represents the first network device. 6011 represents a link in which the first sub-service packet sent by the service end 1 passes through the service interface 1 of the primary network element 1 to the PLA module of the primary network element 1. 6021 represents a link in which the second sub-service packet sent by the service end 1 passes through the service interface 2 of the secondary network element 1 and a service cascading line between the secondary network element 1 and the primary network element 1 to the PLA module of the primary network element. 6031 represents a link used by the PLA module of the primary network element 1 to send the first group of service packets to the first air interface (namely, the intermediate frequency interface of the primary network element 1). 6032 represents the air interface link 1 between the first air interface of the primary network element and the primary network element of the microwave device 2 (corresponding to the second network device). 6041 represents a link in which the second group of service packets sent by the primary network element 1 pass through the PLA cascading line between the primary network element 1 and the secondary network element 1 to the second air interface (namely, the intermediate frequency interface of the secondary network element 1) of the secondary network element 1. 6042 represents the air interface link 2 between the second air interface of the secondary network element 1 and the secondary network element 2 of the microwave device 2. 6033 represents a link in which the first group of service packets pass through the third air interface (namely, the intermediate frequency interface of the primary network element 2) to the PLA module of the primary network element 2. 6043 represents a link in which the second group of service packets pass through the fourth air interface (namely, the intermediate frequency interface of the secondary network element 2) and the PLA cascading line between the secondary network element 2 and the primary network element 2 to the PLA module of the primary network element 2. 6012 represents a link in which the first sub-service packet sent by the primary network element 2 passes through the service interface 3 of the primary network element 2 to the service end 2. 6022 represents a link in which the second sub-service packet sent by the primary network element 2 passes through the service cascading line between the primary network element 2 and the secondary network element 2 and through the service interface 4 of the secondary network element to the service end 2. Refer to FIG. 6A. The microwave device 1 (namely, the first network device) may send the first group of service packets (corresponding to the link represented by 6032) through a first air interface of the first primary network element, and send the second group of service packets (corresponding to the link represented by 6042) through a second air interface of the first secondary network element. Because the air interfaces of the first primary network element and the first secondary network element of the first network device are simultaneously used, air interface bandwidth of the first network device may be used to a maximum extent. It can be learned from FIG. 6A that both the primary network element and the secondary network element of the microwave device 1 can perform service access (in other words, both the primary network element 1 and the secondary network element 1 can perform service packet transmission with the service end), and the secondary network element 1 and the secondary network element 2 both have the PLA module. When a hardware fault occurs on the primary network element 1, the secondary network element 1 may be switched to the primary network element. The PLA module of the secondary network element 1 performs packet slicing on the service packet received through the service interface 2, and sends the service packet through the air interface link 6042. In other words, the first secondary network element of the first network device may have all functions of the first primary network element. When a hardware fault occurs on the first primary network element of the first network device, the first secondary network element may be switched to the primary network element of the first network device. In this way, successful transmission of a service can be ensured.

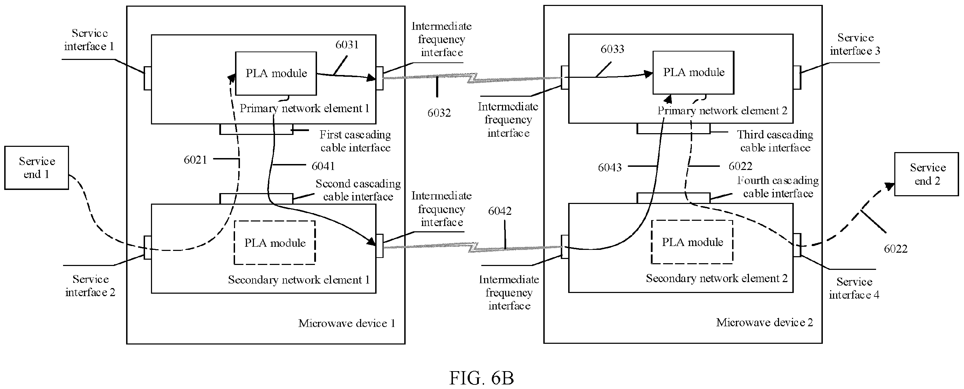

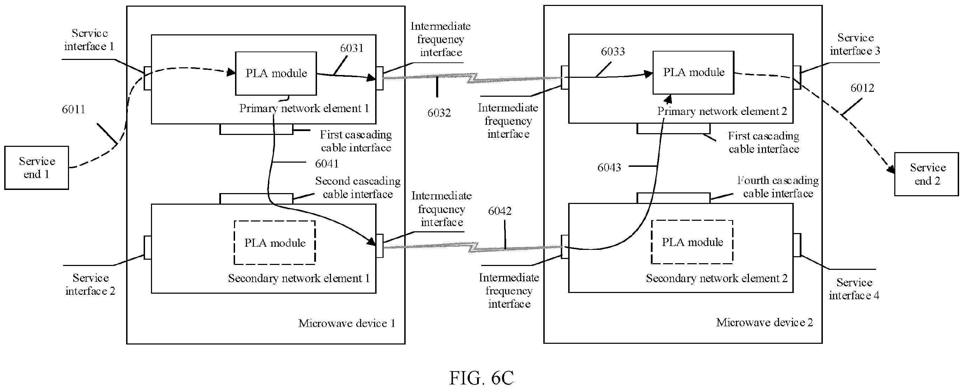

In some embodiments, a LAG may be configured between the service end 1 and the primary network element 1, and a LAG may be configured between the service end 1 and the secondary network element 1. The service end 1 may allocate service traffic to the link corresponding to 6011 and the link corresponding to 6021 by using a load sharing algorithm. When the link corresponding to 6011 or the link corresponding to 6021 fails, the service traffic is automatically reallocated. For example, when the link corresponding to 6011 fails, the service end 1 sends a service packet to the microwave device 1 only through the link corresponding to 6021. FIG. 6B is a schematic diagram of another service packet flow direction according to an embodiment of this application. FIG. 6B shows a flow direction of a service packet sent by the service end 1 to the service end 2 when the service interface 1 of the primary network element 1 is faulty. As shown in FIG. 6B, the service end 1 sends a service packet only to the service interface 2 of the secondary network element 1, and the primary network element 2 sends a service packet to the service end 2 only through the link corresponding to 6022. The difference between the service packet flow direction in FIG. 6B and the service packet flow direction in FIG. 6A lies in that: The service end 1 sends all service packets to the service interface 2 of the secondary network element 1, and the primary network element 2 sends service packets to the service end 2 only through the service interface 4 of the secondary network element 2. For example, when the link corresponding to 6021 fails, the service end 1 sends a service packet to the microwave device 1 only through the link corresponding to 6011. FIG. 6C is a schematic diagram of another service packet flow direction according to an embodiment of this application. FIG. 6C shows a flow direction of a service packet sent by the service end 1 to the service end 2 when the service interface 2 of the secondary network element 1 or the service cascading line between the secondary network element 2 and the primary network element 1 is faulty. As shown in FIG. 6C, the service end 1 sends a service packet only to the service interface 1 of the primary network element 1, and the primary network element 2 sends a service packet to the service end 2 only through the link corresponding to 6012. The difference between the service packet flow direction in FIG. 6C and the service packet flow direction in FIG. 6A lies in that: The service end 1 sends all service packets to the service interface 1 of the primary network element 1, and the primary network element 2 sends service packets to the service end 2 only through the service interface 3 of the primary network element 2.

In this embodiment of this application, the first network device receives the first sub-service packet through the first service interface of the first primary network element, and receives the second sub-service packet through the second service interface of the first secondary network element; and sends the first group of service packets through the first air interface of the first primary network element and sends the second group of service packets through the second air interface of the first secondary network element. This method can improve air interface bandwidth utilization of a microwave device and enable a service packet to be successfully transmitted when a hardware fault occurs on the primary network element of the microwave device.

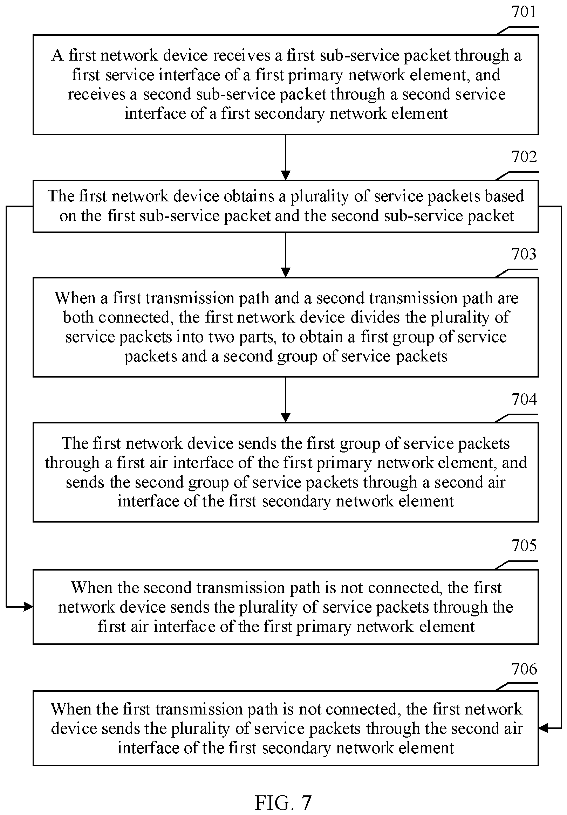

FIG. 7 is a flowchart of another communication method according to an embodiment of this application. The method procedure in FIG. 7 is a refinement and improvement of the method procedure in FIG. 5. As shown in FIG. 7, the method includes the following steps.

701: A first network device receives a first sub-service packet through a first service interface of a first primary network element, and receives a second sub-service packet through a second service interface of a first secondary network element.

An implementation of step 701 may be the same as the implementation of step 501.

702: The first network device obtains a plurality of service packets based on the first sub-service packet and the second sub-service packet.

Data carried in any one of the plurality of service packets in step 702 is included in the first sub-service packet and/or the second sub-service packet. A possible implementation of step 702 is as follows: The first network device combines the first sub-service packet and the second sub-service packet to obtain a target service packet; and slices the target service packet to obtain a plurality of service packets.

703: When the first transmission path and the second transmission path are both connected, the first network device divides the plurality of service packets into two parts, to obtain a first group of service packets and a second group of service packets.

For example, that the first network device divides the plurality of service packets into two parts to obtain the first group of service packets and the second group of service packets may be that the first network device divides the plurality of service packets into two parts by using PLA to obtain the first group of service packets and the second group of service packets. In some embodiments, the first network device may divide the plurality of service packets into two parts by using the PLA based on load of a first air interface link between the first primary network element and the second network device and load between the first secondary network element and the second network device, to obtain the first group of service packets and the second group of service packets. For example, a ratio of the load of the first air interface link to the load of the second air interface link is 2:1. The first network device divides a plurality of service packets obtained from the target service packet into two parts, to obtain the first group of service packets and the second group of service packets. A ratio of service traffic corresponding to the first group of service packets to service traffic corresponding to the second group of service packets is 2:1. The first network device sends the first group of service packets through the first air interface link, and sends the second group of service packets through the second air interface link.

Optionally, before performing step 703, the first network device may determine a connection status of the first transmission path and a connection status of the second transmission path. The first transmission path includes a link between the first air interface of the first primary network element and the second network device, and the second transmission path includes a link for the first primary network element to send data to the first secondary network element and a link between the second air interface of the first secondary network device and the second network device. The first air interface may be an intermediate frequency interface of the first primary network element of the first network device, and the second air interface may be an intermediate frequency interface of the first secondary network element of the first network device. Refer to FIG. 6A, FIG. 6B, and FIG. 6C. The first transmission path is the air interface link represented by 6032, and the second transmission path includes the link represented by 6041 (corresponding to a link used by the primary network element to send data to the secondary network element) and the link represented by 6042 (namely, a link between the second air interface and the second network device).

704: The first network device sends the first group of service packets through the first air interface of the first primary network element, and sends the second group of service packets through the second air interface of the first secondary network element.

An implementation of step 704 may be the same as the implementation of step 503. That the first network device sends the first group of service packets through the first air interface of the first primary network element may be understood as sending the first group of service packets through the first transmission path. That the first network device sends the second group of service packets through the second air interface of the first secondary network element may be understood as sending the second group of service packets through the second transmission path. When the first transmission path and the second transmission path are both connected, the first network device divides a plurality of service packets obtained by slicing the first service packet into two parts, where one part of the service packets is transmitted through the first transmission path, and the other part of the service packets is transmitted through the second transmission path. In this way, air interface bandwidth of the first network device can be fully used.

705: When the second transmission path is not connected, the first network device sends the plurality of service packets through the first air interface of the first primary network element.

That the first network device sends the plurality of service packets through the first air interface of the first primary network element may be understood as sending the plurality of service packets, to be specific, all service packets obtained based on the first sub-service packet and the second sub-service packet, through the first transmission path. In other words, when the second transmission path is not connected and the first transmission path is connected, the first network device sends the plurality of service packets through the first air interface of the first primary network element. A case in which the second transmission path is not connected may be at least one of a fault on a first link, a fault on the first secondary network element, and a fault on the first air interface link, where the first link is a link used by the first primary network element to send data to the first secondary network element, and the first air interface link is an air interface link between the second air interface and the second network device. Refer to FIG. 3. The PLA cascading line on the left in FIG. 3 represents the first link, and the air interface link 2 represents the first air interface link. It should be understood that, when any one of the first link, the first secondary network element, and the first air interface link is faulty, the second transmission path cannot be connected, that is, is not connected.

706: When the first transmission path is not connected, the first network device sends the plurality of service packets through the second air interface of the first secondary network element.

That the first network device sends the plurality of service packets through the second air interface of the first secondary network element may be understood as sending the plurality of service packets, to be specific, all service packets obtained based on the first sub-service packet and the second sub-service packet, through the second transmission path. In other words, when the first transmission path is not connected and the second transmission path is connected, the first network device sends the plurality of service packets through the second air interface of the first secondary network element.

In some embodiments, the first network device may further perform the following operations: obtaining a to-be-sent first service packet; when the second transmission path is not connected, slicing the first service packet to obtain a third group of service packets, and sending the third group of service packets through the first air interface of the first primary network element; and when the first transmission path is not connected, slicing the first service packet to obtain a fourth group of service packets, and sending the fourth group of service packets through the second air interface of the first secondary network element. A case in which the first transmission path is not connected may be that a link between the first air interface of the first primary network element and the second network device is faulty. Refer to FIG. 3. The air interface link 1 in FIG. 3 represents a link between the first air interface of the primary network element and the second network device, and the intermediate frequency interface of the secondary network element 1 represents the second air interface. A possible implementation in which the first network device obtains the to-be-sent first service packet is as follows: The first network device receives the first service packet by using the first secondary network element. Refer to FIG. 6B. 6021 represents a link in which the first service packet sent by the service end 1 passes through the service interface 2 and the service cascading line between the secondary network element 1 and the primary network element 1 to the primary network element 1, and a part from the second cascading interface to the first cascading interface in the link represented by 6021 is a link for the primary network element 1 to receive the first service packet sent by the secondary network element 1. Another possible implementation in which the first network device obtains the to-be-sent first service packet is as follows: The first network device receives the first service packet by using the first primary network element. Refer to FIG. 6C. 6011 represents a link in which the first service packet sent by the service end 1 passes through the service interface 1 to the primary network element 1.

In this embodiment of this application, when the first transmission path and the second transmission path are both connected, the first network device divides a plurality of service packets obtained by slicing the first service packet into two parts, where one part of the service packets is transmitted through the first transmission path, and the other part of the service packets is transmitted through the second transmission path. In this way, air interface bandwidth of the first network device can be fully used. When one of the first transmission path and the second transmission path is not connected, the obtained plurality of service packets are sent through the connected transmission path, to avoid sending the service packets through the path that is not connected, thereby ensuring successful transmission of the service.

FIG. 6A, FIG. 6B, and FIG. 6C show flow directions in which the service end 1 (namely, the first network device) sends service packets to the service end 2 when both the first transmission path and the second transmission path are connected. With reference to the accompanying drawings, the following describes flow directions in which the service end 1 (namely, the first network device) sends service packets to the service end 2 when the first transmission path or the second transmission path is not connected.

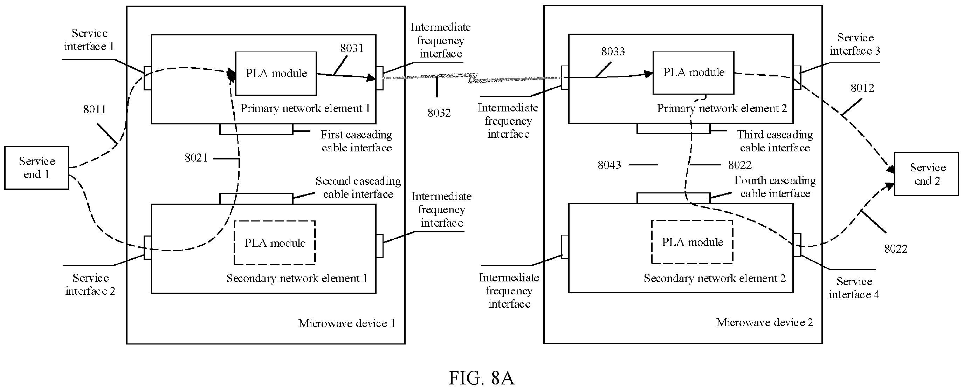

FIG. 8A to FIG. 8C are schematic diagrams of service packet flow directions according to an embodiment of this application. FIG. 8A to FIG. 8C show flow directions in which the service end 1 (namely, the first network device) sends service packets to the service end 2 when the first transmission path is connected and the second transmission path is not connected.

FIG. 8A shows a flow direction in which the service end 1 (namely, the first network device) sends service packets to the service end 2 when only the second transmission path is faulty (that is, not connected). A microwave device 1 in FIG. 8A represents the first network device. 8011 represents a link in which a service packet (corresponding to the first sub-service packet) sent by the service end 1 passes through the service interface 1 of the primary network element 1 to the PLA module of the primary network element 1. 8021 represents a link in which a service packet (corresponding to the second sub-service packet) sent by the service end 1 passes through the service interface 2 of the secondary network element 1 and a service cascading line between the secondary network element 1 and the primary network element 1 to the PLA module of the primary network element 1. 8031 represents a link used by the PLA module of the primary network element 1 to send service packets to the first air interface. 8032 represents the air interface link 1 between the first air interface of the primary network element 1 and the primary network element 2 of the microwave device 2 (corresponding to the second network device). 8033 represents a link in which service packets pass through the third air interface (namely, the intermediate frequency interface of the primary network element 2) to the PLA module of the primary network element 2. 8012 represents a link in which service packets sent by the primary network element 2 pass through the service interface 3 of the primary network element 2 to the service end 2. 8022 represents a link in which the primary network element 2 passes through the service cascading line between the primary network element 2 and the secondary network element 2 and through the service interface 4 of the secondary network element 2 to the service end 2. It can be learned from FIG. 8A that, the service packet sent by the service end 1 is sent to the PLA module of the primary network element 1 through the link 8011 and the link 8021; the service packet sent by the PLA module of the primary network element 1 sequentially passes through the link 8031, the link 8032, and the link 8033 to the PLA module of the primary network element 2; and the service packet sent by the PLA module of the primary network element 2 is sent to the service end 2 through the link 8012 and the link 8022.

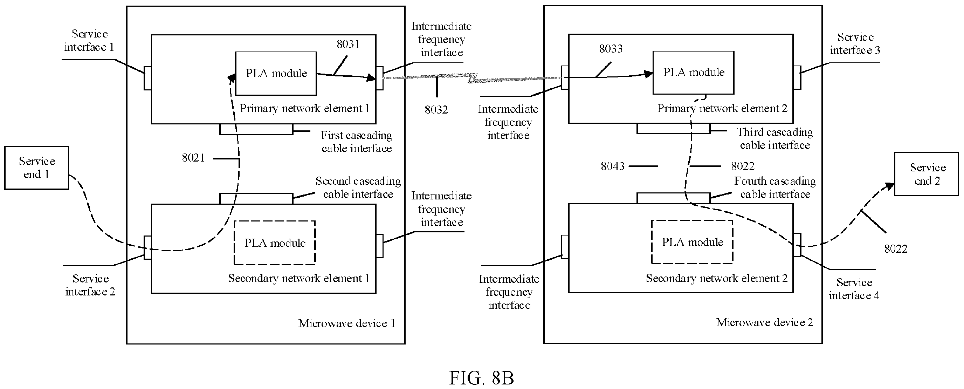

FIG. 8B shows a flow direction in which the service end 1 (namely, the first network device) sends service packets to the service end 2 when the second transmission path is faulty (that is, not connected) and the service interface of the first primary network element of the first network device is faulty. A microwave device 1 in FIG. 8B represents the first network device. 8021 represents a link in which a service packet sent by the service end 1 passes through the service interface 2 of the secondary network element 1 and a service cascading line between the secondary network element 1 and the primary network element 1 to the PLA module of the primary network element. 8031 represents a link used by the PLA module of the primary network element 1 to send service packets to the first air interface. 8032 represents the air interface link 1 between the first air interface of the primary network element 1 and the primary network element 2 of the microwave device 2 (corresponding to the second network device). 8033 represents a link in which service packets pass through the third air interface (namely, the intermediate frequency interface of the primary network element 2) to the PLA module of the primary network element 2. 8012 represents a link in which service packets sent by the primary network element 2 pass through the service interface 3 of the primary network element 2 to the service end 2. Because all service interfaces of the first primary network element of the first network device are faulty, the first network device receives, through only the service interface of the first secondary network element, the service packets sent by the service end. It can be learned from FIG. 8B that, the service packets sent by the service end 1 are all sent to the PLA module of the primary network element 1 through the link 8021; the service packet sent by the PLA module of the primary network element 1 sequentially passes through the link 8031, the link 8032, and the link 8033 to the PLA module of the primary network element 2; and the service packet sent by the PLA module of the primary network element 2 is sent to the service end 2 through the link 8022.

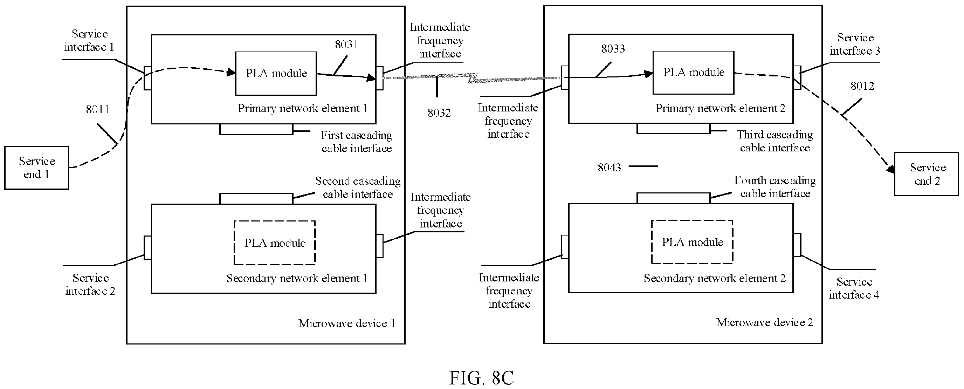

FIG. 8C shows a flow direction in which the service end 1 (namely, the first network device) sends service packets to the service end 2 when the second transmission path is faulty (that is, not connected) and the service cascading interface of the primary network element and/or the secondary network element of the first network device are/is faulty. FIG. 8C shows a flow direction in which the service end 1 (namely, the first network device) sends service packets to the service end 2 when the second transmission path is faulty (that is, not connected) and the first secondary network element of the first network device is faulty. A microwave device 1 in FIG. 8C represents the first network device. 8011 represents a link in which a service packet sent by the service end 1 passes through the service interface 1 of the primary network element 1 to the PLA module of the primary network element. 8031 represents a link used by the PLA module of the primary network element 1 to send service packets to the first air interface. 8032 represents the air interface link between the first air interface of the primary network element and the primary network element 2 of the microwave device 2 (corresponding to the second network device). 8033 represents a link in which service packets pass through the third air interface (namely, the intermediate frequency interface of the primary network element 2) to the PLA module of the primary network element 2. 8012 represents a link in which service packets sent by the primary network element 2 pass through the service interface 3 of the primary network element 2 to the service end 2. When the service cascading interface of the first primary network element and/or the first secondary network element of the first network device are/is faulty, the first primary network element of the first network device cannot receive, through the service cascading line, the service packets sent by the first secondary network element. Therefore, the first network device receives, through only the service interface of the first primary network element, the service packets sent by the service end. It can be learned from FIG. 8C that, the service packet sent by the service end 1 is sent to the PLA module of the primary network element 1 through the link 8011; the service packet sent by the PLA module of the primary network element 1 sequentially passes through the link 8031, the link 8032, and the link 8033 to the PLA module of the primary network element 2; and the service packet sent by the PLA module of the primary network element 2 is sent to the service end 2 through the link 8012.

Refer to FIG. 3. When at least one of the following cases occurs: a PLA cascading interface in the first cascading interface is faulty (corresponding to a fault of the first link), a first secondary network element 1 is faulty, and an air interface link 2 (corresponding to the first air interface link) is faulty, a flow direction in which the service end 1 sends service packets to the service end 2 is the same as the flow direction of the service packets in FIG. 8A.

In a possible implementation, when detecting that a connection between the PLA cascading interface of the first primary network element and the PLA cascading interface of the first secondary network element is suspended (that is, in a down state), the first primary network element of the first network device determines that the PLA cascading interface of the first primary network element or the first secondary network element is faulty, that is, the first link is faulty; or when detecting that a connection between the PLA cascading interface of the first primary network element and the PLA cascading interface of the first secondary network element is not suspended (that is, in an up state), the first primary network element of the first network device determines that the first link is not faulty. The first network device may determine, in any manner, whether the first secondary network element is faulty. This is not limited in this application.

In a possible implementation, after detecting that the PLA cascading interface in the first cascading interface of the first network device is faulty, the first primary network element of the first network device disables slice sending to the first secondary network element, that is, stops sending service packets to the first secondary network element through the PLA cascading line. In some examples, after detecting that a connection between the PLA cascading interface of the first secondary network element and the PLA cascading interface of the first primary network element is suspended (that is, in a down state), the first secondary network element of the first network device sends an alarm (for example, an MW RDI alarm) to the second secondary network element of the second network device. After receiving the alarm, the second secondary network element of the second network device notifies the second primary network element of the second network device, and the second primary network element of the second network device disables service packets sending of the second secondary network element. The MW_RDI alarm indicates that a defect occurs at the remote end of a microwave link.

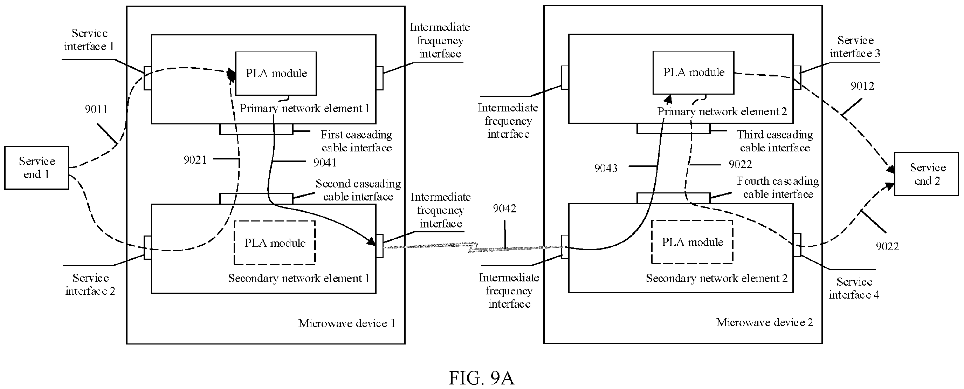

FIG. 9A to FIG. 9C are schematic diagrams of service packet flow directions according to an embodiment of this application. FIG. 9A to FIG. 9C show flow directions in which the service end 1 (namely, the first network device) sends service packets to the service end 2 when the second transmission path is connected and the first transmission path is not connected.

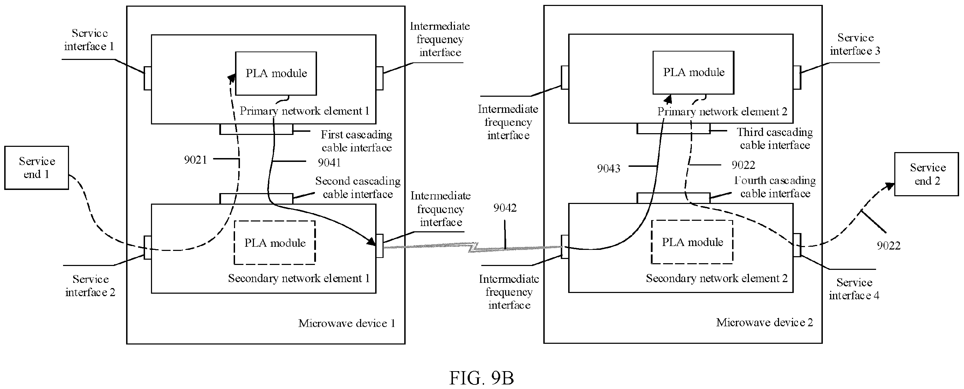

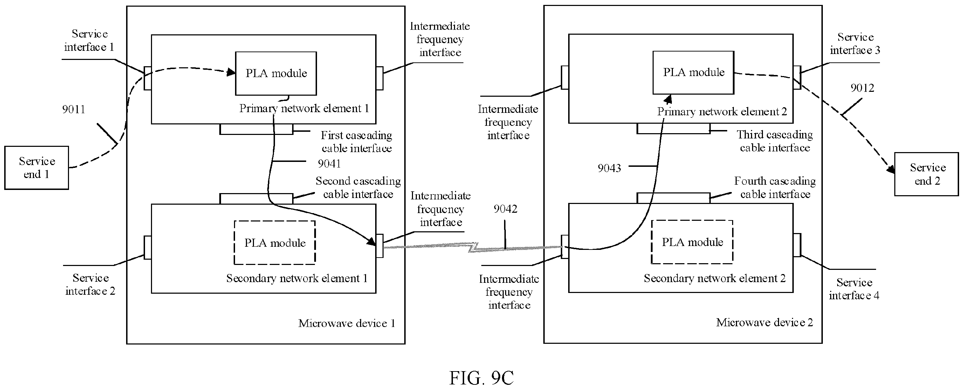

FIG. 9A shows a flow direction in which the service end 1 (namely, the first network device) sends service packets to the service end 2 when only the first transmission path is faulty (that is, not connected). A microwave device 1 in FIG. 9Arepresents the first network device. 9011 represents a link in which a service packet (corresponding to the first sub-service packet) sent by the service end 1 passes through the service interface 1 of the primary network element 1 to the PLA module of the primary network element 1. 9021 represents a link in which a service packet (corresponding to the second sub-service packet) sent by the service end 1 passes through the service interface 2 of the secondary network element 1 and a service cascading line between the secondary network element 1 and the primary network element 1 to the PLA module of the primary network element. 9041 represents a link in which service packets sent by the primary network element 1 pass through the PLA cascading line between the primary network element 1 and the secondary network element 1 to the second air interface of the secondary network element 1. 9042 represents the air interface link 2 between the second air interface of the secondary network element 1 and the secondary network element 2 of the microwave device 2. 9043 represents a link in which service packets from the second air interface of the secondary network element 1 pass through the fourth air interface (namely, the intermediate frequency interface of the secondary network element 2) and the PLA cascading line between the secondary network element 2 and the primary network element 2 to the PLA module of the primary network element 2. 9012 represents a link in which a service packet (corresponding to the first sub-service packet) sent by the primary network element 2 passes through the service interface 3 of the primary network element 2 to the service end 2. 9022 represents a link in which a service packet (corresponding to the second sub-service packet) sent by the primary network element 2 passes through the service cascading line between the primary network element 2 and the secondary network element 2 and through the service interface 4 of the secondary network element to the service end 2. It can be learned from FIG. 9A that, the service packet sent by the service end 1 is sent to the PLA module of the primary network element 1 through the link 9011 and the link 9021; the service packet sent by the PLA module of the primary network element 1 sequentially passes through the link 9041, the link 9042, and the link 9043 to the PLA module of the primary network element 2; and the service packet sent by the PLA module of the primary network element 2 is sent to the service end 2 through the link 9012 and the link 9022.

FIG. 9B shows a flow direction in which the service end 1 (namely, the first network device) sends service packets to the service end 2 when the second transmission path is faulty (that is, not connected) and the service interface of the first primary network element is faulty. A microwave device 1 in FIG. 9B represents the first network device. 9021 represents a link in which a service packet sent by the service end 1 passes through the service interface 2 of the secondary network element 1 and a service cascading line between the secondary network element 1 and the primary network element 1 to the PLA module of the primary network element. 9041 represents a link in which service packets sent by the primary network element 1 pass through the PLA cascading line between the primary network element 1 and the secondary network element 1 to the second air interface of the secondary network element 1. 9042 represents the air interface link 2 between the second air interface of the secondary network element 1 and the secondary network element 2 of the microwave device 2. 9043 represents a link in which service packets from the second air interface of the secondary network element 1 pass through the fourth air interface (namely, the intermediate frequency interface of the secondary network element 2) and the PLA cascading line between the secondary network element 2 and the primary network element 2 to the PLA module of the primary network element 2. 9022 represents a link in which a service packet (corresponding to the second sub-service packet) sent by the primary network element 2 passes through the service cascading line between the primary network element 2 and the secondary network element 2 and through the service interface 4 of the secondary network element to the service end 2. It can be learned from FIG. 9B that, the service packet sent by the service end 1 is sent to the PLA module of the primary network element 1 through the link 9021; the service packet sent by the PLA module of the primary network element 1 sequentially passes through the link 9041, the link 9042, and the link 9043 to the PLA module of the primary network element 2; and the service packet sent by the PLA module of the primary network element 2 is sent to the service end 2 through the link 9022.

FIG. 9C shows a flow direction in which the service end 1 (namely, the first network device) sends service packets to the service end 2 when the second transmission path is faulty (that is, not connected) and the service cascading interface of the first primary network element and/or the first secondary network element of the first network device are/is faulty. A microwave device 1 in FIG. 9C represents the first network device. 9011 represents a link in which service packets (namely, all service packets) sent by the service end 1 pass through the service interface 1 of the primary network element 1 to the PLA module of the primary network element 1. 9041 represents a link in which service packets sent by the primary network element 1 pass through the PLA cascading line between the primary network element 1 and the secondary network element 1 to the second air interface of the secondary network element 1. 9042 represents the air interface link 2 between the second air interface of the secondary network element 1 and the secondary network element 2 of the microwave device 2. 9043 represents a link in which service packets from the second air interface of the secondary network element 1 pass through the fourth air interface (namely, the intermediate frequency interface of the secondary network element 2) and the PLA cascading line between the secondary network element 2 and the primary network element 2 to the PLA module of the primary network element 2. 9012 represents a link in which a service packet (corresponding to the first sub-service packet) sent by the primary network element 2 passes through the service interface 3 of the primary network element 2 to the service end 2. It can be learned from FIG. 9C that, the service packet sent by the service end 1 is sent to the PLA module of the primary network element 1 through the link 9011; the service packet sent by the PLA module of the primary network element 1 sequentially passes through the link 9041, the link 9042, and the link 9043 to the PLA module of the primary network element 2; and the service packet sent by the PLA module of the primary network element 2 is sent to the service end 2 through the link 9012.

In a possible implementation, when detecting that a connection between the service cascading interface of the first primary network element and the service cascading interface of the first secondary network element is suspended (that is, in a down state), the first primary network element of the first network device determines that the service cascading interface of the first primary network element or the first secondary network element is faulty. Alternatively, the first network device may determine, by using another method, whether the service cascading interface of the first primary network element or the first secondary network element is faulty. This is not limited in this application.

The flow directions in which the service end 1 (namely, the first network device) sends service packets to the service end 2 when the first transmission path or the second transmission path is not connected are described above. The following lists several fault scenarios in which the first primary network element and the first secondary network element of the first network device are switched and service packet flow directions in these fault scenarios.

Fault scenario 1: The first primary network element of the first network device is faulty.

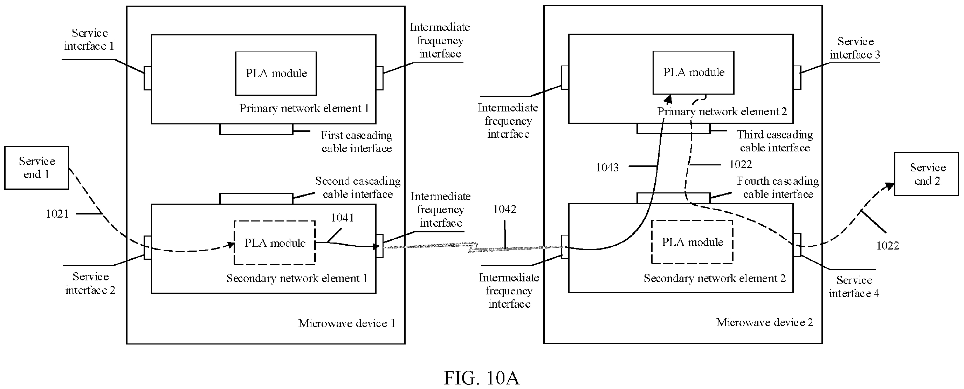

In the fault scenario 1, an original secondary network element (namely, the first secondary network element) of the first network device is switched to the primary network element, and an original primary network element is switched to the secondary network element. After the primary/secondary switching (that is, the original secondary network element is switched to the primary network element, and the primary network element is switched to the secondary network element), the primary network element disables sending service packets to the secondary network element (that is, the primary network element stops sending service packets to the secondary network element), and the second primary network element of the second network device disables sending service packets to the air interface of the first network device. FIG. 10A is a schematic diagram of a service packet flow direction according to an embodiment of this application. FIG. 10A shows a flow direction in which the service end 1 (namely, the first network device) sends service packets to the service end 2 in the fault scene 1.

FIG. 10A shows a flow direction in which the service end 1 (namely, the first network device) sends service packets to the service end 2 when the first primary network element of the first network device is faulty. A microwave device 1 in FIG. 10A represents the first network device. 1021 represents a link in which service packets (namely, all service packets) sent by the service end 1 pass through the service interface 2 of the secondary network element 1 to the PLA module of the secondary network element 1. 1041 represents a link in which the secondary network element 1 sends service packets to the second air interface (namely, the intermediate frequency interface of the secondary network element 1) of the secondary network element 1. 1042 represents the air interface link 2 between the second air interface of the secondary network element 1 and the secondary network element 2 of the microwave device 2. 1043 represents a link in which service packets from the second air interface of the secondary network element 1 pass through the fourth air interface (namely, the intermediate frequency interface of the secondary network element 2) and the PLA cascading line between the secondary network element 2 and the primary network element 2 to the PLA module of the primary network element 2. 1022 represents a link in which a service packet sent by the primary network element 2 passes through the service cascading line between the primary network element 2 and the secondary network element 2 and through the service interface 4 of the secondary network element 2 to the service end 2. It can be learned from FIG. 10A that, the service packet sent by the service end 1 is sent to the PLA module of the secondary network element 1 through the link 1021; the service packet sent by the PLA module of the secondary network element 1 sequentially passes through the link 1041, the link 1042, and the link 1043 to the PLA module of the primary network element 2; and the service packet sent by the PLA module of the primary network element 2 is sent to the service end 2 through the link 1022.

Fault scenario 2: Both the service interface and the service cascading interface of the first primary network element of the first network device are faulty.

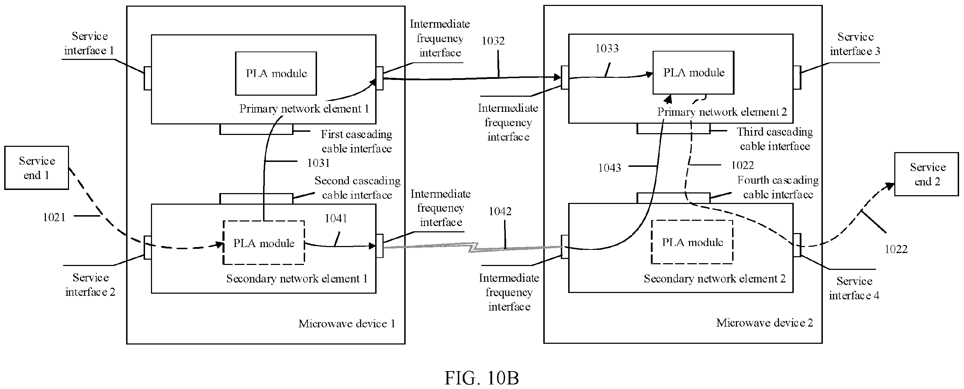

In the fault scenario 2, an original secondary network element of the first network device is switched to the primary network element, and an original primary network element is switched to the secondary network element. FIG. 10B is a schematic diagram of another service packet flow direction according to an embodiment of this application.

FIG. 10B shows a flow direction in which the service end 1 (namely, the first network device) sends service packets to the service end 2 when both the service interface and the service cascading interface of the first primary network element of the first network device are faulty. It should be understood that, when both the service interface and the service cascading interface of the first primary network element of the first network device are faulty, the first primary network element of the first network device cannot receive the service packets. A microwave device 1 in FIG. 10B represents the first network device. 1021 represents a link in which service packets (namely, all service packets) sent by the service end 1 pass through the service interface 2 of the secondary network element 1 to the PLA module of the secondary network element 1. 1031 represents a link in which service packets sent by the secondary network element 1 pass through the PLA cascading line between the secondary network element 1 and the primary network element 1 to the first air interface of the primary network element 1. 1032 represents the air interface link 1 between the first air interface of the primary network element 1 and the primary network element 2 of the microwave device 2. 1033 represents a link in which service packets from the first air interface of the primary network element 1 pass through the third air interface of the primary network element 2 to the PLA module of the primary network element 2. 1041 represents a link in which the PLA module of the secondary network element 1 sends service packets to the second air interface (namely, the intermediate frequency interface of the secondary network element 1) of the secondary network element 1. 1042 represents the air interface link 2 between the second air interface of the secondary network element 1 and the secondary network element 2 of the microwave device 2. 1043 represents a link in which service packets from the second air interface of the secondary network element 1 pass through the fourth air interface (namely, the intermediate frequency interface of the secondary network element 2) and the PLA cascading line between the secondary network element 2 and the primary network element 2 to the PLA module of the primary network element 2. 1022 represents a link in which a service packet sent by the primary network element 2 passes through the service cascading line between the primary network element 2 and the secondary network element 2 and through the service interface 4 of the secondary network element to the service end 2. It can be learned from FIG. 10B that, the service packet sent by the service end 1 is sent to the PLA module of the secondary network element 1 through the link 1021; a part of the service packets sent by the PLA module of the secondary network element 1 sequentially pass through the link 1041, the link 1042, and the link 1043 to the PLA module of the primary network element 2, and another part of the service packets sequentially pass through the link 1031, the link 1032, and the link 1033 to the PLA module of the primary network element 2; and the service packet sent by the PLA module of the primary network element 2 is sent to the service end 2 through the link 1022.

Fault scenario 3: The air interface link between the first primary network element of the first network device and the second network device is faulty, and the PLA cascading interfaces of the first primary network element and/or the first secondary network element are/is faulty.

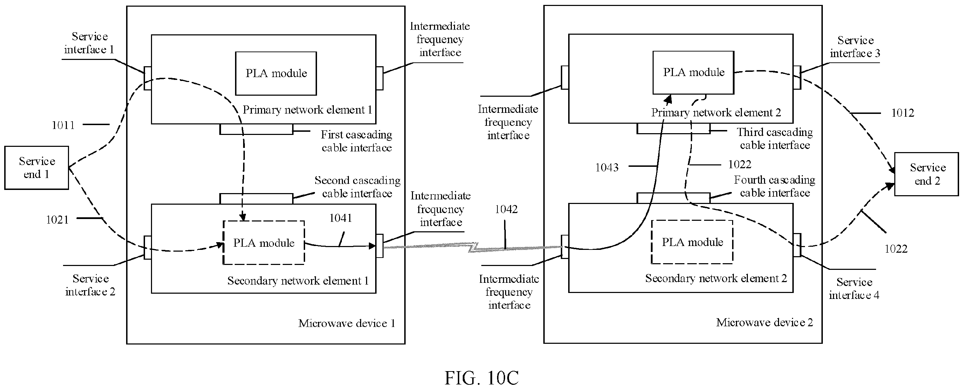

In the fault scenario 3, an original secondary network element of the first network device is switched to the primary network element, and an original primary network element is switched to the secondary network element. After the primary/secondary switching, the primary network element disables sending service packets to the secondary network element (that is, the primary network element stops sending service packets to the secondary network element), and the second primary network element of the second network device disables sending service packets to the air interface of the first network device. FIG. 10C is a schematic diagram of another service packet flow direction according to an embodiment of this application.

FIG. 10C shows a flow direction in which the service end 1 (namely, the first network device) sends service packets to the service end 2 when air interface link between the first primary network element of the first network device and the second network device is faulty, and the PLA cascading interfaces of the first primary network element and/or the first secondary network element are/is faulty. A microwave device 1 in FIG. 10C represents the first network device. 1011 represents a link in which a part of service packets sent by the service end 1 pass through the service interface 1 of the primary network element 1 and the service cascading line between the primary network element 1 and the secondary network element 1 to the PLA module of the secondary network element 1. 1021 represents a link in which another part of service packets sent by the service end 1 pass through the service interface 2 of the secondary network element 1 to the PLA module of the secondary network element 1. 1041 represents a link in which the PLA module of the secondary network element 1 sends service packets to the second air interface (namely, the intermediate frequency interface of the secondary network element 1) of the secondary network element 1. 1042 represents the air interface link 2 between the second air interface of the secondary network element 1 and the secondary network element 2 of the microwave device 2. 1043 represents a link in which service packets from the second air interface of the secondary network element 1 pass through the fourth air interface (namely, the intermediate frequency interface of the secondary network element 2) and the PLA cascading line between the secondary network element 2 and the primary network element 2 to the PLA module of the primary network element 2. 1012 represents a link in which a part of service packets sent by the primary network element 2 pass through the service interface 3 of the primary network element 2 to the service end 2. 1022 represents a link in which another part of service packets sent by the primary network element 2 pass through the service cascading line between the primary network element 2 and the secondary network element 2 and through the service interface 4 of the secondary network element to the service end 2. It can be learned from FIG. 10C that, a part of the service packets sent by the service end 1 are sent to the PLA module of the secondary network element 1 through the link 1011, and another part of the service packets sent by the service end 1 are sent to the PLA module of the secondary network element 1 through the link 1021; the service packet sent by the PLA module of the secondary network element 1 sequentially passes through the link 1041, the link 1042, and the link 1043 to the PLA module of the primary network element 2; and a part of the service packets sent by the PLA module of the primary network element 2 are sent to the service end 2 through the link 1012, and another part of the service packets sent by the PLA module of the primary network element 2 are sent to the service end 2 through the link 1022.

The fault scenario 1, the fault scenario 2, and the fault scenario 3 are several fault scenarios listed in this application in which the first network device can ensure successful transmission of the service packets by switching the first primary network element and the first secondary network element. This application does not exhaust fault scenarios in which the first network device can ensure successful transmission of service packets by performing primary/secondary switching.

With reference to the accompanying drawings, the following describes a possible manner in which the first network device implements primary/secondary switching.

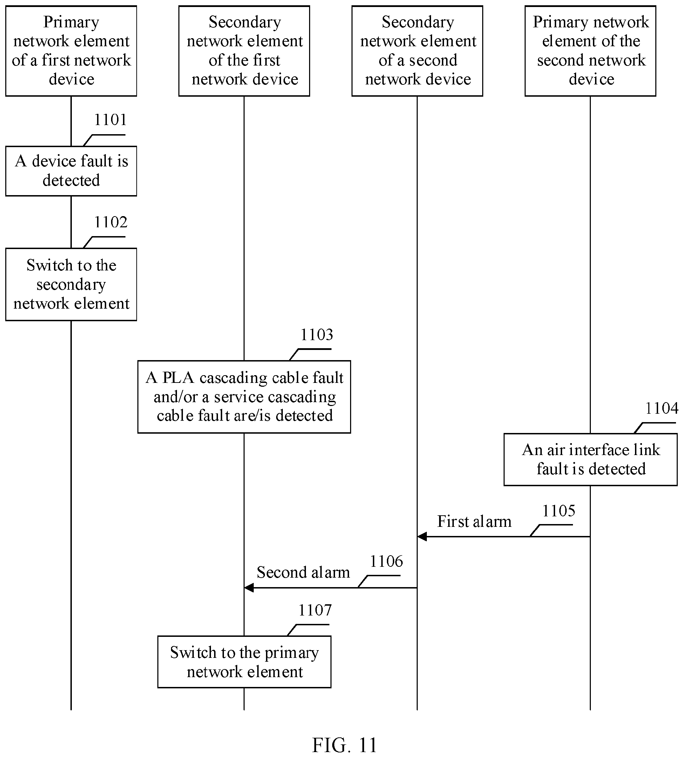

FIG. 11 is a schematic flowchart of a method in which a first network device implements primary/secondary switching according to an embodiment of this application. As shown in FIG. 11, the method includes the following steps.

1101: The first primary network element of the first network device detects that the first primary network element is faulty.

That the first primary network element of the first network device detects that the first primary network element is faulty may be that the first primary network element of the first network device detects that both the service interface and the service cascading interface of the first primary network element are faulty; may be that the first primary network element of the first network device detects that the air interface link between the first primary network element and the second network device is faulty and the PLA cascading interface of the first primary network element is faulty; may be that the PLA module of the first primary network element is faulty; or may be another fault that causes the first primary network element not able to be used as the primary network element of the first network device.

1102: The first primary network element of the first network device is switched to the secondary network element.

For example, the first primary network element of the first network device is switched to the secondary network element after the first primary network element is faulty. In some fault scenarios, the first network device may not perform step 1101 and step 1102 when implementing primary/secondary switching. For example, in the fault scenario 1, the first primary network element of the first network device does not need to perform step 1101 and step 1102. For another example, in the fault scenario 2 and the fault scenario 3, the first primary network element of the first network device performs step 1101 and step 1102.

1103: The first secondary network element of the first network device detects that the PLA cascading line and/or the service cascading line are/is faulty.

The PLA cascading line is a cascading line used by the first primary network element of the first network device to send service packets to the first secondary network element of the first network device. The service cascading line is a cascading line used by the first secondary network element of the first network device to send service packets to the first primary network element of the first network device. For example, the PLA cascading line and the service cascading line are different optical fibers connected to the first primary network element and the first secondary network element of the first network device, or may be a same optical fiber, and colored light is used to implement multi-channel transmission with one optical fiber.

1104: The second primary network element of the second network device detects that the air interface link is faulty.

Step 1104 may be that the second primary network element of the second network device detects that the air interface link (corresponding to the air interface link 1) between the second primary network element of the second network device and the first primary network element of the first network device is faulty.

1105: The second primary network element of the second network device sends a first alarm to the second secondary network element of the second network device.

The first alarm indicates that an air interface link between the second primary network element of the second network device and the first primary network element of the first network device is faulty, that is, disconnected.

1106: The second primary network element of the second network device sends a second alarm to the second secondary network element of the second network device.

The first alarm indicates that the air interface link between the second primary network element of the second network device and the first primary network element of the first network device is faulty. The second alarm is the same as or different from the first alarm.

1107: The first secondary network element of the first network device is switched to the primary network element.

When detecting that the PLA cascading line and/or the service cascading line is faulty and receiving alarm information (namely, the second alarm), the first secondary network element of the first network device is switched to the primary network element. Optionally, when detecting that the first link is disconnected and the alarm information is received, the first secondary network element of the first network device is switched to the primary network element of the first network device, where the first link is a link (corresponding to the service cascading line) for the first secondary network element to send data to the first primary network element and/or a link (corresponding to the PLA cascading line) for the first primary network element to send data to the first secondary network element, and the alarm information (corresponding to the second alarm) indicates that the air interface link between the second primary network element of the second network device and the first primary network element of the first network device is faulty.

In this embodiment of this application, the first primary network element and the first secondary network element of the first network device may quickly implement primary/secondary switching, to ensure successful transmission of service packets.

The foregoing embodiment describes the communication method executed by the first network device that performs service packet transmission with the service end serving as the transmit end. The following describes, with reference to the accompanying drawings, a communication method executed by a second network device that performs service packet transmission with a service end serving as a receive end.

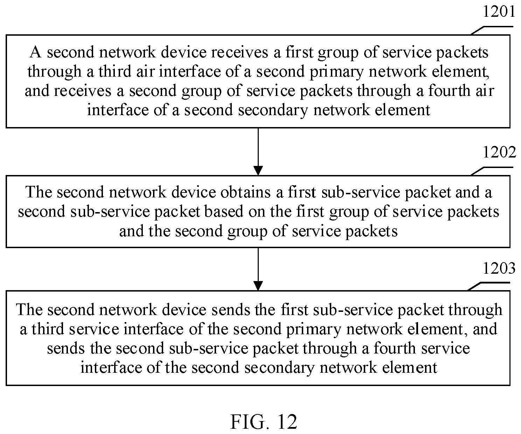

FIG. 12 is a flowchart of another communication method according to an embodiment of this application. As shown in FIG. 12, the method includes the following steps.

1201: A second network device receives a first group of service packets through a third air interface of a second primary network element, and receives a second group of service packets through a fourth air interface of a second secondary network element.

The second primary network element and the second secondary network element are both included in the second network device. Refer to FIG. 3. In this application, the microwave device 2 represents the second network device, the primary network element 2 represents the second primary network element of the second network device, the secondary network element 2 represents the second secondary network element of the second network device, the intermediate frequency interface of the primary network element 2 represents the third air interface, the intermediate frequency interface of the secondary network element 2 represents the fourth air interface, the service interface 3 represents a third service interface, and the service interface 4 represents a fourth service interface.

1202: The second network device obtains a first sub-service packet and a second sub-service packet based on the first group of service packets and the second group of service packets.

At least part of information in any service packet included in the first group of service packets and at least part of information in any service packet included in the second group of service packets are included in the first sub-service packet and/or the second sub-service packet. A possible implementation of step 1202 is as follows: When the first group of service packets and/or the second group of service packets include two labels (corresponding to service labels), the second network device obtains the first sub-service packet and the second sub-service packet based on the first group of service packets and the second group of service packets. This application relates to two types of labels: one is a service label, and the other is a slice label. The service label may include a label (corresponding to a first label) added by the first primary network element of the first network device to service packets received by the first network element and/or a label (corresponding to a second label) added by a first secondary network element of the first network device to service packets received by the first network element. The slice label is a label added to a plurality of service packets obtained by performing packet slicing on a service packet.

For example, that the second network device obtains a first sub-service packet and a second sub-service packet based on the first group of service packets and the second group of service packets may be: performing, based on slice labels of service packets included in the first group of service packets and slice labels of service packets included in the second group of service packets, packet slicing on the service packets included in the first group of service packets and the service packets included in the second group of service packets, to obtain a target service packet; and dividing the target service packet into two parts to obtain the first sub-service packet and the second sub-service packet. The label of the first sub-service packet is the first label, and the label of the second sub-service packet is the second label. Optionally, the target service packet does not include the slice label but includes the service label. Both the first label and the second label are service labels. A possible implementation in which the second network device divides the target service packet into two parts to obtain the first sub-service packet and the second sub-service packet is as follows: The second network device divides the target service packet into the first sub-service packet and the second sub-service packet based on a label included in the target service packet, where in the target service packet, a label of the first sub-service packet is a first label, and a label of the second sub-service packet is a second label.

1203: The second network device sends the first sub-service packet through the third service interface of the second primary network element, and sends the second sub-service packet through the fourth service interface of the second secondary network element.

Refer to FIG. 3. The service interface 3 represents the third service interface of the second primary network element, the service interface 4 represents the fourth service interface of the second secondary network element, the communication link 5 represents a link through which the first sub-service packet sent by the third service interface passes, and the communication link 6 represents a link through which the second sub-service packet sent by the fourth service interface passes. Optionally, the third service interface includes two or more service interfaces, and the fourth service interface includes two or more service interfaces. Refer to FIG. 4A. Two black rectangular areas on the primary network element 2 represent the third service interface, and two black rectangular areas on the secondary network element 2 represent the fourth service interface. FIG. 4B shows a possible service packet flow direction of service packet transmission performed by the microwave communication system in FIG. 4A. In FIG. 4B, each solid line with an arrow represents a flow direction of a service packet, the primary network element 2 sends the first sub-service packet to the service end 2 through two or more service interfaces (corresponding to the third service interface), and the secondary network element 2 sends the second sub-service packet to the service end 2 through two or more service interfaces (corresponding to the fourth service interface).

The second network device receives the service packets through the third air interface of the second primary network element and the fourth air interface of the second secondary network element simultaneously (which may also be understood as in parallel), and sends the service packets to a service end through the service interface of the second primary network element and the service interface of the second secondary network element simultaneously. It should be understood that, when the second primary network element of the second network device is faulty, the second secondary network element of the second network device may be switched to the primary network element; and when all service interfaces of the second primary network element of the second network device are faulty, the second network device may send data only through the service interface of the second secondary network element. It may be understood that a processing manner when the second network device is faulty is similar to a processing manner when the first network device is faulty, and details are not described herein again.

In this embodiment of this application, the second network device receives the service packets through the air interface of the second primary network element and the air interface of the second secondary network element simultaneously (which may also be understood as in parallel), and sends the service packets to a service end through the service interface of the second primary network element and the service interface of the second secondary network element simultaneously. This method can improve air interface bandwidth utilization of a microwave device and enable a service packet to be successfully transmitted when a hardware fault occurs on the primary network element of the microwave device.

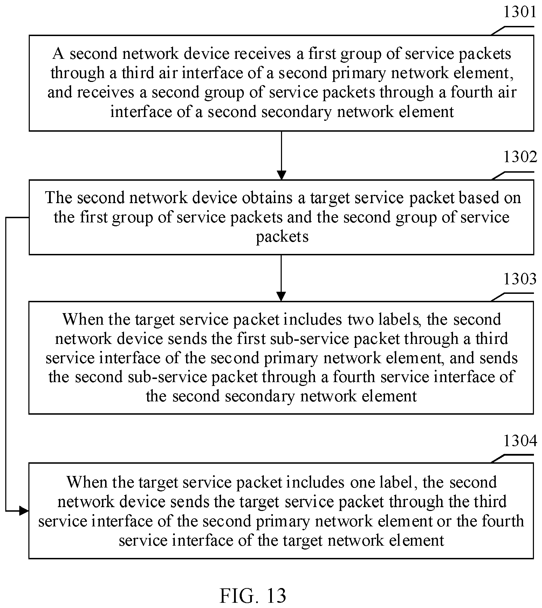

FIG. 13 is a flowchart of another communication method according to an embodiment of this application. The method procedure in FIG. 13 is a refinement and improvement of the method procedure in FIG. 12. As shown in FIG. 13, the method includes the following steps.

1301: A second network device receives a first group of service packets through a third air interface of a second primary network element, and receives a second group of service packets through a fourth air interface of a second secondary network element.

The second primary network element and the second secondary network element are both included in the second network device. An implementation of step 1301 may be the same as the implementation of step 1201.

1302: The second network device obtains a target service packet based on the first group of service packets and the second group of service packets.

A possible implementation of step 1302 is as follows: The second network device performs, based on slice labels of service packets included in the first group of service packets and slice labels of service packets included in the second group of service packets, packet slicing on the service packets included in the first group of service packets and the service packets included in the second group of service packets, to obtain the target service packet.

1303: When the target service packet includes two labels, the second network device sends the first sub-service packet through a third service interface of the second primary network element, and sends the second sub-service packet through a fourth service interface of the second secondary network element.

The first sub-service packet and the second sub-service packet are both included in the target service packet. The label of the first sub-service packet is the first label, and the label of the second sub-service packet is the second label. A possible implementation of step 1303 is as follows: When the target service packet includes two labels, the second network device divides the target service packet into the first sub-service packet and the second sub-service packet based on the two labels included in the target service packet, sends the first sub-service packet through the third service interface of the second primary network element, and sends the second sub-service packet through the fourth service interface of the second secondary network element. In the target service packet, the label of the first sub-service packet is the first label, and the label of the second sub-service packet is the second label. For example, the first primary network element of the first network device receives the first sub-service packet and adds the first label to the first sub-service packet. The first secondary network element of the first network device receives the second sub-service packet and adds the second label to the second sub-service packet. The first network device combines the first sub-service packet and the second sub-service packet by using the first primary network element, to obtain the target service packet. The first network device performs packet slicing on the target service packet by using the first primary network element, to obtain the first group of service packets and the second group of service packets. The first network device sends the first sub-service packet through the first air interface of the first primary network element and sends the second group of service packets through the second air interface of the first secondary network element. The second network device receives the first group of service packets through the third air interface of the second primary network element and receives the second group of service packets through the fourth air interface of the second secondary network element. In this example, the target service packet includes the first label and the second label.

1304: When the target service packet includes one label, the second network device sends the target service packet through the third service interface of the second primary network element or the fourth service interface of the target network element.

A possible implementation of step 1304 is as follows: The second network device sends the target service packet through the third service interface of the second primary network element when the first service packet includes the first label, where the target service packet is a service packet received by the second network device from the first network device, and the first label is a label added by the first primary network element of the first network device to the target service packet; and the second network device sends the first service packet through the fourth service interface of the second secondary network element when the first service packet includes the second label, where the second label is a label added by the first secondary network element of the first network device to the target service packet.

In some embodiments, the second network device may further perform the following operations: obtaining the first service packet, and sending the first service packet through the third service interface or the fourth service interface when the first service packet comprises one label. For example, the second network device sends the first service packet through the first service interface of the second primary network element when the first service packet includes the first label, where the first service packet is a service packet received by the second network device from the first network device, and the first label is a label added by the first primary network element of the first network device to the first service packet; and the second network device sends the first service packet through the second service interface of the second secondary network element when the first service packet includes the second label, where the second label is a label added by the first secondary network element of the first network device to the first service packet. Optionally, a manner in which the second network device obtains the first service packet is as follows: The second network device receives a third group of service packets through the third air interface of the second primary network element or the fourth air interface of the second secondary network element; and obtains the first service packet based on the third group of service packets.

In this embodiment of this application, the second network device may quickly select, based on the label included in the service packet, a manner that is the same as that of the transmit end to send the service packet.

The foregoing embodiments separately describe a communication method procedure performed by the first network device and a communication method procedure performed by the second network device. With reference to the accompanying drawings, the following describes configurations that need to be completed in advance by the first network device and the second network device to implement the foregoing communication method procedure.

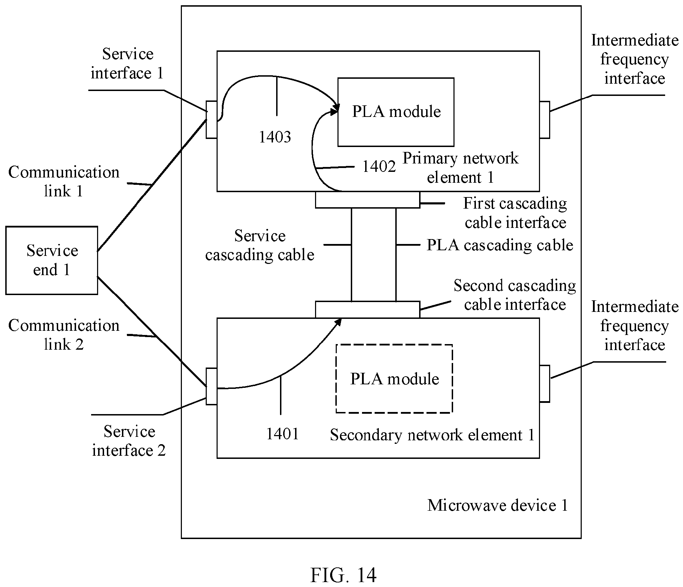

FIG. 14 is a schematic diagram of a private line service of a microwave device according to an embodiment of this application. The microwave device in FIG. 14 may be the first network device. As shown in FIG. 14, 1401 represents a private line from a service interface of a secondary network element 1 to a service cascading interface of the secondary network element 1. 1402 represents a private line from a service cascading interface of a primary network element 1 to a PLA module (that is, an intermediate frequency interface) of the primary network element 1. 1403 represents a private line from a service cascading interface of the primary network element 1 to the PLA module of the primary network element 1. In some embodiments, before implementing the foregoing communication method procedure, the first network device needs to complete the following configurations:
(1) The first secondary network element of the first network device establishes, based on a user configuration, a NULL->QinQ private line service from the service interface of the first secondary network element to the service cascading interface of the first secondary network element, and specifies QinQ vlan (for example, 2 herein) based on a service sequence number. In this case, the first secondary network element adds a label QinQ vlan 2 (corresponding to the second label) to the service packet received through the service interface of the first secondary network element, and forwards the service packet to the first primary network element.
(2) The first primary network element establishes, based on the user configuration, an S->S private line service from the service cascading interface of the first primary network element to the PLA module of the first primary network element, where S-vlan is 2, and transparently transmits a service packet from the service cascading interface to the PLA module of the first primary network element through the private line.
(3) The first primary network element establishes, based on the user configuration, a NULL->QinQ private line service from a service interface of the first primary network element to the PLA module of the first primary network element, and specifies QinQ vlan (for example, 1 herein) based on a service sequence number. In this case, the first primary network element adds a label QinQ vlan 1 (corresponding to the first label) to the service packet received through the service interface of the first primary network element.
(4) The first primary network element performs packet slicing on service packets that are labeled with QinQ labels by the first primary network element and the first secondary network element, and sends the service packets to an air interface (corresponding to the first air interface) of the local network element and an air interface (corresponding to the second air interface) of the first secondary network element through the PLA cascading line based on actual air interface bandwidth.

A configuration process of the second network device is an inversed process of the foregoing processing, and details are not described herein again.

The foregoing describes embodiments of this application in detail, and the following describes communication apparatuses in this application.

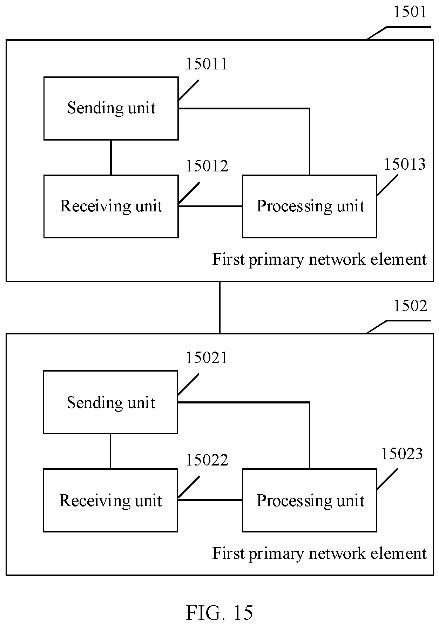

FIG. 15 is a schematic diagram of a structure of a communication apparatus according to an embodiment of this application. As shown in FIG. 15, the communication apparatus includes:
a first primary network element 1501, configured to receive a first sub-service packet through a first service interface; and
a first secondary network element 1502, configured to receive a second sub-service packet through a second service interface, where
the first primary network element 1501 is further configured to obtain a first group of service packets and a second group of service packets based on the first sub-service packet and the second sub-service packet, where at least part of information in any service packet included in the first group of service packets and at least part of information in any service packet included in the second group of service packets are included in the first sub-service packet and/or the second sub-service packet;
the first primary network element 1501 is further configured to send the first group of service packets through a first air interface; and
the first secondary network element 1502 is further configured to send the second group of service packets through a second air interface.

In a possible implementation, the first group of service packets and the second group of service packets are obtained by dividing a plurality of service packets obtained based on the first sub-service packet and the second sub-service packet into two groups.

In a possible implementation, the first primary network element 1501 is specifically configured to: combine the first sub-service packet and the second sub-service packet to obtain a target service packet; slice the target service packet to obtain a plurality of service packets; and divide the plurality of service packets into two parts to obtain the first group of service packets and the second group of service packets.

In a possible implementation, the first primary network element 1501 is specifically configured to: when a first transmission path and a second transmission path are both connected, obtain the first group of service packets and the second group of service packets based on the first sub-service packet and the second sub-service packet, where the first transmission path includes a link between the first air interface and a second network device, and the second transmission path includes a link for the first primary network element to send data to the first secondary network element and a link between the second air interface and the second network device.

In a possible implementation, the first primary network element 1501 is further configured to: obtain a to-be-sent first service packet; when the second transmission path is not connected, slice the first service packet to obtain a third group of service packets, and send the third group of service packets through the first air interface of the first primary network element; and when the first transmission path is not connected, slice the first service packet to obtain a fourth group of service packets, and send the fourth group of service packets through the second air interface of the first secondary network element.

In a possible implementation, the first primary network element 1501 is specifically configured to: receive a third sub-service packet through the first service interface and receive a fourth sub-service packet through the second service interface; and obtain the first service packet based on the third sub-service packet and the fourth sub-service packet; or the first primary network element is specifically configured to receive the first service packet through the second service interface.

In a possible implementation, the first secondary network element 1502 is further configured to be switched to the first primary network element of the first network device when a first link is disconnected and alarm information is received, where the first link is a link for the first secondary network element to send data to the first primary network element and/or a link for the first primary network element to send data to the first secondary network element, and the alarm information indicates that the second network device does not receive a service packet sent by the first primary network element through the first air interface.

In a possible implementation, a case in which the second transmission path is not connected includes at least one of a fault on a second link, a fault on the first secondary network element, and a fault on a first air interface link, where the second link is a link used by the first primary network element to send data to the first secondary network element, and the first air interface link is a link between the second air interface and the second network device.

It should be understood that when the communication apparatus is a component that implements the foregoing function in a microwave device (namely, a network device), the first primary network element 1501 and the first secondary network element 1502 may not be integrated together. To be specific, the first primary network element 1501 and the first secondary network element 1502 are independent of each other. When hardware of the first primary network element 1501 is faulty, the first secondary network element 1502 may still work normally; or when hardware of the first secondary network element 1502 is faulty, the first primary network element 1501 may still work normally. The first primary network element 1501 may include a sending unit 15011, a receiving unit 15012, and a processing unit 15013. The sending unit 15011 may be a transmitter, and the receiving unit 15012 may be a receiver. Alternatively, the sending unit 15011 and the receiving unit 15012 may be integrated into one device, for example, a transceiver. The first secondary network element 1502 may include a sending unit 15021, a receiving unit 15022, and a processing unit 15023. The sending unit 15021 may be a transmitter, and the receiving unit 15022 may be a receiver. Alternatively, the sending unit 15021 and the receiving unit 15022 may be integrated into one device, for example, a transceiver The processing module 15013 may be a processor. The processing module 15023 may be a processor.

When the communication apparatus is a chip, the first primary network element 1501 and the first secondary network element 1501 may be same one or more processors, logic circuits, or the like. When the communication apparatus is a chip, the first primary network element 1501 and the first secondary network element 1501 may be different processors, logic circuits, or the like. The first service interface and the first air interface of the first primary network element 1501 are different communication interfaces, and the second service interface and the second air interface of the first secondary network element 1502 are different communication interfaces.

The communication apparatus in this embodiment of this application has any function of the terminal device in the foregoing method. Details are not described herein again.

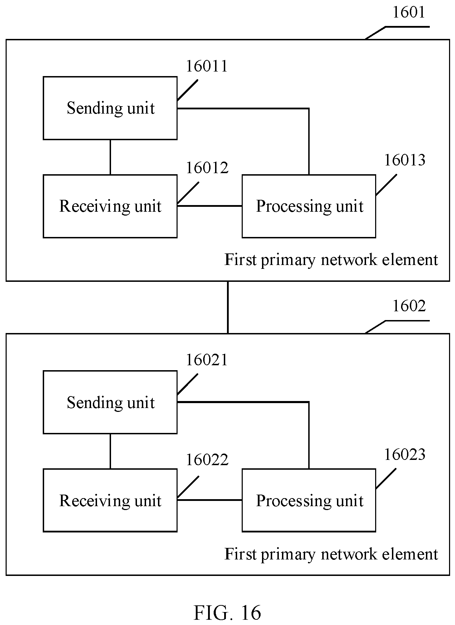

FIG. 16 is a schematic diagram of a structure of another communication apparatus according to an embodiment of this application. As shown in FIG. 16, the communication apparatus includes:
a second primary network element 1601, configured to receive a first group of service packets through a third air interface; and
a second secondary network element 1602, configured to receive a second group of service packets through a fourth air interface, where
the second primary network element 1601 is further configured to obtain a first sub-service packet and a second sub-service packet based on the first group of service packets and the second group of service packets, where at least part of information in any service packet included in the first group of service packets and at least part of information in any service packet included in the second group of service packets are included in the first sub-service packet and/or the second sub-service packet;
the second primary network element 1601 is further configured to send the first sub-service packet through a third service interface; and
the second secondary network element 1602 is further configured to send the second sub-service packet through a fourth service interface of the second secondary network element.

In a possible implementation, the second primary network element 1601 is specifically configured to: when the first group of service packets and/or the second group of service packets include two labels, obtain the first sub-service packet and the second sub-service packet based on the first group of service packets and the second group of service packets, where a label of the first sub-service packet is a first label, and a label of the second sub-service packet is a second label.

In a possible implementation, the second primary network element 1601 is specifically configured to: perform, based on slice labels of service packets included in the first group of service packets and slice labels of service packets included in the second group of service packets, packet slicing on the service packets included in the first group of service packets and the service packets included in the second group of service packets, to obtain a target service packet; and divide the target service packet into two parts to obtain the first sub-service packet and the second sub-service packet.

In a possible implementation, the second primary network element 1601 is further configured to send the first service packet through the third service interface or the fourth service interface when the first service packet comprises one label.

In a possible implementation, the second primary network element 1601 is further configured to: send the first service packet through the third service interface when the first service packet includes the first label, where the first service packet is a service packet received by the second network device from a first network device, and the first label is a label added by a first primary network element of the first network device to the first service packet; and send the first service packet through the fourth service interface of the second secondary network element when the first service packet includes the second label, where the second label is a label added by a first secondary network element of the first network device to the first service packet.

It should be understood that when the communication apparatus is a component that implements the foregoing function in a microwave device (namely, a network device), the second primary network element 1601 and the second secondary network element 1602 may not be integrated together. To be specific, the second primary network element 1601 and the second secondary network element 1602 are independent of each other. When hardware of the second primary network element 1601 is faulty, the second secondary network element 1602 may still work normally; or when hardware of the second secondary network element 1602 is faulty, the second primary network element 1601 may still work normally. The second primary network element 1601 may include a sending unit 16011, a receiving unit 16012, and a processing unit 16013. The sending unit 16011 may be a transmitter, and the receiving unit 16012 may be a receiver. Alternatively, the sending unit 16011 and the receiving unit 16012 may be integrated into one device, for example, a transceiver. The second secondary network element 1602 may include a sending unit 16021, a receiving unit 16022, and a processing unit 16023. The sending unit 16021 may be a transmitter, and the receiving unit 16022 may be a receiver. Alternatively, the sending unit 16021 and the receiving unit 16022 may be integrated into one device, for example, a transceiver. The processing module 16013 may be a processor. The processing module 16023 may be a processor

When the communication apparatus is a chip, the second primary network element 1601 and the second secondary network element 1601 may be same one or more processors, logic circuits, or the like. When the communication apparatus is a chip, the second primary network element 1601 and the second secondary network element 1601 may be different processors, logic circuits, or the like. The third service interface and the third air interface of the second primary network element 1601 are different communication interfaces, and the fourth service interface and the fourth air interface of the second secondary network element 1602 are different communication interfaces.

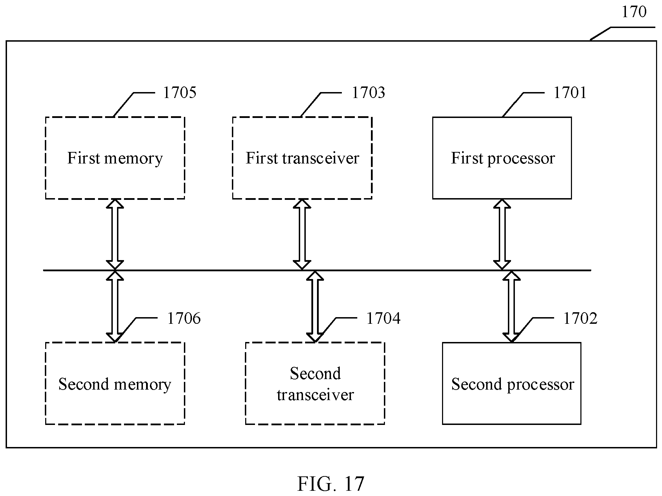

FIG. 17 is a schematic diagram of a structure of another communication apparatus according to an embodiment of this application. As shown in FIG. 17, the communication apparatus 170 includes a first processor 1701 and a second processor 1702. The first processor 1702 and the second processor 1702 are configured to implement functions of the communication apparatus (for example, the first network device or the second network device) in the method provided in embodiments of this application. Optionally, the first processor 1702 and the second processor 1702 are a same processor. Optionally, the first processor 1702 and the second processor 1702 are independent processors. The communication apparatus 170 may further include a first transceiver 1703 and a second transceiver 1704. The first transceiver 1703 and the second transceiver 1704 are both configured to communicate with another device/apparatus by using a transmission medium. The first processor 1701 receives and sends data and/or signaling by using the first transceiver 1703, and is configured to implement the method in the foregoing method embodiments. The second processor 1702 receives and sends data and/or signaling by using the second transceiver 1704, and is configured to implement the method in the foregoing method embodiments. Optionally, the first processor 1701 may implement a function of the first primary network element, and the second processor may implement a function of the first secondary network element. Optionally, the first processor 1701 may implement a function of the second primary network element, and the second processor may implement a function of the second secondary network element. For example, the first processor 1701 implements a function of the processing unit 15013, and the first transceiver 1703 implements functions of the sending unit 15011 and the receiving unit 15012. For another example, the second processor 1702 implements a function of the processing unit 16013, and the second transceiver 1704 implements functions of the sending unit 16011 and the receiving unit 16012.

The communication apparatus 170 may be the first network device, or may be the second network device.

Optionally, the communication apparatus 170 may further include a first memory 1705 and a second memory 1706, configured to store program instructions and/or data. The first memory 1705 is coupled to the first processor 1701, and the second memory 1706 is coupled to the second processor 1706. The coupling in this embodiment of this application may be an indirect coupling or a communication connection between apparatuses, units, or modules in an electrical form, a mechanical form, or another form, and is used for information exchange between the apparatuses, the units, or the modules. The first processor 1701 may perform cooperative operations with the first memory 1705, and the second processor 1702 may perform cooperative operations with the second memory 1706. The first processor 1701 may execute program instructions stored in the first memory 1705, and the second processor 1702 may execute program instructions stored in the second memory 1706.

A specific connection medium between the first processor 1702, the second processor 1702, the first transceiver 1703, the second transceiver 1704, the first memory 1705, and the second memory 1706 is not limited in this embodiment of this application. In this embodiment of this application, in FIG. 17, the first processor 1702, the second processor 1702, the first transceiver 1703, the second transceiver 1704, the first memory 1705, and the second memory 1706 are connected by using a bus 1440, and the bus is represented by using a bold line in FIG. 17. A connection manner between other components is merely used as an example for description, and does not limit the present invention. The bus may be classified into an address bus, a data bus, a control bus, and the like. For ease of representation, only one bold line is used to represent the bus in FIG. 17, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to this embodiment of this application may be directly performed and completed by a hardware processor, or may be performed and completed by a combination of hardware and software modules in the processor.

It may be understood that, for a specific implementation of the communication apparatus shown in FIG. 17, refer to functions of the communication apparatuses shown in FIG. 15 and FIG. 16.

In the several embodiments provided in this application, it should be understood that the disclosed systems, apparatuses, and methods may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The foregoing units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, technical solutions of this application essentially, or a part contributing to the current technology, or all or some of the technical solutions may be implemented in a form of a software product. The computer software product is stored in a readable storage medium and includes several instructions for instructing a computer device (which may be a personal computer, a server, a network device, or the like) to perform all or some of the steps of the method in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In addition, according to the communication method provided in this embodiment of this application, this application further provides a computer program. The computer program is used to perform operations and/or processing performed by the communication apparatuses (to be specific, the first network device and the second network device) in the method provided in this application.

This application further provides a computer-readable storage medium. The computer-readable storage medium stores computer instructions. When the computer instructions are run on a computer, the computer is enabled to perform an operation and/or processing performed by the communication apparatus in the method provided in this application.

This application further provides a computer-readable storage medium. The computer-readable storage medium stores computer instructions. When the computer instructions are run on a computer, the computer is enabled to perform an operation and/or processing performed by the communication apparatus in the method provided in this application.

This application further provides a computer program product. The computer program product includes computer code or instructions. When the computer code or the instructions are run on a computer, the method in the method embodiments of this application is implemented.

This application further provides a wireless communication system, including the first network device and the second network device in this application.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first network device, a first sub-service packet through a first service interface of a primary network element, and receiving a second sub-service packet through a second service interface of a secondary network element, wherein the first primary network element and the first secondary network element are both comprised in the first network device;
obtaining, by the first network device, a first group of service packets and a second group of service packets based on the first sub-service packet and the second sub-service packet, wherein at least part of information in any service packet comprised in the first group of service packets and at least part of information in any service packet comprised in the second group of service packets are comprised in the first sub-service packet and/or the second sub-service packet; and
sending, by the first network device, the first group of service packets through a first air interface of the first primary network element, and sending the second group of service packets through a second air interface of the first secondary network element.

2. The method according to claim 1, wherein the first group of service packets and the second group of service packets are obtained by dividing a plurality of service packets obtained based on the first sub-service packet and the second sub-service packet into two groups.

3. The method according to claim 1 or 2, wherein the obtaining, by the first network device, a first group of service packets and a second group of service packets based on the first sub-service packet and the second sub-service packet comprises:
when a first transmission path and a second transmission path are both connected, obtaining, by the first network device, the first group of service packets and the second group of service packets based on the first sub-service packet and the second sub-service packet, wherein the first transmission path comprises a link between the first air interface and a second network device, and the second transmission path comprises a link for the first primary network element to send data to the first secondary network element and a link between the second air interface and the second network device.

4. The method according to any one of claims 1 to 3, wherein the method further comprises:
obtaining, by the first network device, a to-be-sent first service packet;
when the second transmission path is not connected, slicing, by the first network device, the first service packet to obtain a third group of service packets; and sending, by the network device, the third group of service packets through the first air interface of the first primary network element; and
when the first transmission path is not connected, slicing, by the first network device, the first service packet to obtain a fourth group of service packets; and sending, by the first network device, the fourth group of service packets through the second air interface of the first secondary network element.

5. The method according to claim 4, wherein the obtaining, by the first network device, a to-be-sent first service packet comprises:
receiving, by the first network device, a third sub-service packet through the first service interface and receiving a fourth sub-service packet through the second service interface; and obtaining, by the first network device, the first service packet based on the third sub-service packet and the fourth sub-service packet; or
receiving, by the first network device, the first service packet through the second service interface.

6. The method according to any one of claims 1 to 5, wherein the method further comprises:
switching, from the first secondary network element, to the first primary network element of the first network device when a first link is disconnected and alarm information is received, wherein the first link is a link for the first secondary network element to send data to the first primary network element and/or a link for the first primary network element to send data to the first secondary network element, and the alarm information indicates that the second network device does not receive a service packet sent by the first primary network element through the first air interface.

7. A communication method, comprising:
receiving, by a second network device, a first group of service packets through a third air interface of a second primary network element, and receiving a second group of service packets through a fourth air interface of a second secondary network element, wherein the second primary network element and the second secondary network element are both comprised in the second network device;
obtaining, by the second network device, a first sub-service packet and a second sub-service packet based on the first group of service packets and the second group of service packets, wherein at least part of information in any service packet comprised in the first group of service packets and at least part of information in any service packet comprised in the second group of service packets are comprised in the first sub-service packet and/or the second sub-service packet; and
sending, by the second network device, the first sub-service packet through a third service interface of the second primary network element, and sending the second sub-service packet through a fourth service interface of the second secondary network element.

8. The method according to claim 7, wherein the obtaining, by the second network device, a first sub-service packet and a second sub-service packet based on the first group of service packets and the second group of service packets comprises:
when the first group of service packets and/or the second group of service packets comprise two labels, obtaining, by the second network device, the first sub-service packet and the second sub-service packet based on the first group of service packets and the second group of service packets, wherein a label of the first sub-service packet is a first label, and a label of the second sub-service packet is a second label.

9. The method according to claim 7 or 8, wherein the method further comprises:
obtaining, by the second network device, a first service packet; and
sending, by the second network device, the first service packet through the third service interface or the fourth service interface when the first service packet comprises one label.

10. The method according to claim 9, wherein the sending, by the second network device, the first service packet through a first service interface of the second primary network element or a second service interface of the second secondary network element when the first service packet comprises one label comprises:
sending, by the second network device, the first service packet through the third service interface of the second primary network element when the first service packet comprises the first label, wherein the first service packet is a service packet received by the second network device from a first network device, and the first label is a label added by a first primary network element of the first network device to the first service packet; and
sending, by the second network device, the first service packet through the fourth service interface of the second secondary network element when the first service packet comprises the second label, wherein the second label is a label added by a first secondary network element of the first network device to the first service packet.

11. A communication apparatus, comprising:
a first primary network element, configured to receive a first sub-service packet through a first service interface; and
a first secondary network element, configured to receive a second sub-service packet through a second service interface, wherein
the first primary network element is further configured to obtain a first group of service packets and a second group of service packets based on the first sub-service packet and the second sub-service packet, wherein at least part of information in any service packet comprised in the first group of service packets and at least part of information in any service packet comprised in the second group of service packets are comprised in the first sub-service packet and/or the second sub-service packet;
the first primary network element is further configured to send the first group of service packets through a first air interface; and
the first secondary network element is further configured to send the second group of service packets through a second air interface.

12. The communication apparatus according to claim 11, wherein the first group of service packets and the second group of service packets are obtained by dividing a plurality of service packets obtained based on the first sub-service packet and the second sub-service packet into two groups.

13. The communication apparatus according to claim 11 or 12, wherein
the first primary network element is specifically configured to: when a first transmission path and a second transmission path are both connected, obtain the first group of service packets and the second group of service packets based on the first sub-service packet and the second sub-service packet, wherein the first transmission path comprises a link between the first air interface and a second network device, and the second transmission path comprises a link for the first primary network element to send data to the first secondary network element and a link between the second air interface and the second network device.

14. The communication apparatus according to any one of claims 11 to 13, wherein
the first primary network element is further configured to: obtain a to-be-sent first service packet; when the second transmission path is not connected, slice the first service packet to obtain a third group of service packets, and send the third group of service packets through the first air interface of the first primary network element; and when the first transmission path is not connected, slice the first service packet to obtain a fourth group of service packets, and send the fourth group of service packets through the second air interface of the first secondary network element.

15. The communication apparatus according to claim 14, wherein
the first primary network element is specifically configured to: receive a third sub-service packet through the first service interface and receive a fourth sub-service packet through the second service interface; and obtain the first service packet based on the third sub-service packet and the fourth sub-service packet; or
the first primary network element is specifically configured to receive the first service packet through the second service interface.

16. The communication apparatus according to any one of claims 11 to 15, wherein
the first secondary network element is further configured to be switched to the first primary network element of the first network device when a first link is disconnected and alarm information is received, wherein the first link is a link for the first secondary network element to send data to the first primary network element and/or a link for the first primary network element to send data to the first secondary network element, and the alarm information indicates that the second network device does not receive a service packet sent by the first primary network element through the first air interface.

17. A communication apparatus, comprising:
a second primary network element, configured to receive a first group of service packets through a third air interface; and
a second secondary network element, configured to receive a second group of service packets through a fourth air interface, wherein
the second primary network element is further configured to obtain a first sub-service packet and a second sub-service packet based on the first group of service packets and the second group of service packets, wherein at least part of information in any service packet comprised in the first group of service packets and at least part of information in any service packet comprised in the second group of service packets are comprised in the first sub-service packet and/or the second sub-service packet;
the second primary network element is further configured to send the first sub-service packet through a third service interface; and
the second secondary network element is further configured to send the second sub-service packet through a fourth service interface of the second secondary network element.

18. The communication apparatus according to claim 17, wherein
the second primary network element is specifically configured to: when the first group of service packets and/or the second group of service packets comprise two labels, obtain the first sub-service packet and the second sub-service packet based on the first group of service packets and the second group of service packets, wherein a label of the first sub-service packet is a first label, and a label of the second sub-service packet is a second label.

19. The communication apparatus according to claim 17 or 18, wherein
the second primary network element is further configured to send the first service packet through the third service interface or the fourth service interface when the first service packet comprises one label.

20. The communication apparatus according to claim 19, wherein
the second primary network element is further configured to: send the first service packet through the third service interface when the first service packet comprises the first label, wherein the first service packet is a service packet received by the second network device from a first network device, and the first label is a label added by a first primary network element of the first network device to the first service packet; and send the first service packet through the fourth service interface of the second secondary network element when the first service packet comprises the second label, wherein the second label is a label added by a first secondary network element of the first network device to the first service packet.

21. A communication apparatus, comprising a processor and a memory, wherein
the memory is configured to store computer-executable instructions; and
the processor is configured to execute the computer-executable instructions stored in the memory, so that the communication apparatus performs the method according to any one of claims 1 to 6; or the processor is configured to execute the computer-executable instructions stored in the memory, so that the communication apparatus performs the method according to any one of claims 7 to 10.

22. A computer-readable storage medium, wherein the computer-readable storage medium is configured to store instructions; and when the instructions are executed, the method according to any one of claims 1 to 6 is implemented, or when the instructions are executed, the method according to any one of claims 7 to 10 is implemented.

23. A microwave communication system, comprising the communication apparatus according to any one of claims 11 to 16 and the communication apparatus according to any one of claims 17 to 20.
